(19)

**Europäisches Patentamt**
**European Patent Office**
**Office européen des brevets**

(11) **EP 4 550 713 A1**

(12) **EUROPEAN PATENT APPLICATION**

(43) Date of publication:
**07.05.2025 Bulletin 2025/19**

(21) Application number: **23207403.9**

(22) Date of filing: **02.11.2023**

(51) International Patent Classification (IPC):
**H04L 9/00** *(2022.01)*

(52) Cooperative Patent Classification (CPC):
**H04L 9/50;** H04L 2209/56

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **BSV Association**
**6300 Zug (CH)**

(72) Inventor: **OSKARSSON, Siggi**
**London W1W8AP (GB)**

(74) Representative: **Page White Farrer**
**Bedford House**
**21a John Street**
**London WC1N 2BF (GB)**

(54) **BLOCKCHAIN NODE AND METHODS FOR HIGH VOLUME TRANSACTION PROCESSING**

(57)    Methods, devices, and a data structure for processing large volumes of transactions in blockchain nodes without using a mempool. Incoming transactions are validated and added to a candidate block. Transaction identifiers are added to an ordered set of transaction identifiers in an array until complete. The completed array and its Merkle root are propagated to other nodes. A placeholder transaction may be used in the first array in place of a coinbase transaction and its Merkle path may be determined to enable replacement of the placeholder transaction by the coinbase transaction during mining. Subsequent arrays are appended to the consolidated list of transaction identifiers are they are completed to continuously build a growing candidate block for mining.

**FIG. 7**

EP 4 550 713 A1

**Description**

**TECHNICAL FIELD**

The present disclosure relates to blockchain networks and, in particular, to methods and devices for storing and retrieving Merkle tree data.

**BACKGROUND**

A blockchain refers to a form of distributed data structure, wherein a duplicate copy of the blockchain is maintained at each of a plurality of nodes in a distributed peer-to-peer (P2P) network (referred to below as a "blockchain network") and widely publicised. The blockchain is formed from a chain of blocks of data, wherein each block includes one or more transactions. Each transaction, other than so-called "coinbase transactions", points back to a preceding transaction in a sequence which may span one or more blocks up until one or more coinbase transactions. Coinbase transactions are discussed below. Transactions that are submitted to the blockchain network are included in new blocks. New blocks are created by a process often referred to as "mining", which involves each of a plurality of the nodes competing to perform "proof-of-work", i.e. solving a cryptographic puzzle based on a representation of a defined set of ordered and validated pending transactions waiting to be included in a new block of the blockchain. It should be noted that the blockchain may be pruned at a node, and the publication of blocks can be achieved through the publication of mere block headers.

The transactions in the blockchain are used to perform one or more of the following: to convey a digital asset (i.e. a number of digital tokens), to order a set of journal entries in a virtualised ledger or registry, to receive and process timestamp entries, and/or to time-order index pointers. A blockchain can also be exploited in order to layer additional functionality on top of the blockchain. Blockchain protocols may allow for storage of additional user data or indexes to data in a transaction. There is no pre-specified limit to the maximum data capacity that can be stored within a single transaction, and therefore increasingly more complex data can be incorporated. For instance this may be used to store an electronic document in the blockchain, or audio or video data.

Nodes of the blockchain network (which are often referred to as "miners") perform a distributed transaction registration and verification process, which will be described in detail below. In summary, during this process a node validates transactions and inserts them into a block template for which they attempt to identify a valid proof-of-work solution. Once a valid solution is found, a new block is propagated to other nodes of the network, thus enabling each node to record the new block on the blockchain. In order to have a transaction recorded in the blockchain, a user (e.g. a blockchain client application) sends the transaction to one of the nodes of the network to be propagated. Nodes which receive the transaction may race to find a proof-of-work solution incorporating the validated transaction into a new block. Each node is configured to enforce the same node protocol, which will include one or more conditions for a transaction to be valid. Invalid transactions will not be propagated nor incorporated into blocks. Assuming the transaction is validated and thereby accepted onto the blockchain, then the transaction (including any user data) will thus remain registered and indexed at each of the nodes in the blockchain network as an immutable public record.

The node who successfully solved the proof-of-work puzzle to create the latest block is typically rewarded with a new transaction called the "coinbase transaction" which distributes an amount of the digital asset, i.e. a number of tokens. The detection and rejection of invalid transactions is enforced by the actions of competing nodes who act as agents of the network and are incentivised to report and block malfeasance. The widespread publication of information allows users to continuously audit the performance of nodes. The publication of the mere block headers allows participants to ensure the ongoing integrity of the blockchain.

In an "output-based" model (sometimes referred to as a UTXO-based model), the data structure of a given transaction includes one or more inputs and one or more outputs. Any spendable output includes an element specifying an amount of the digital asset that is derivable from the proceeding sequence of transactions. The spendable output is sometimes referred to as a UTXO ("unspent transaction output"). The output may further include a locking script specifying a condition for the future redemption of the output. A locking script is a predicate defining the conditions necessary to validate and transfer digital tokens or assets. Each input of a transaction (other than a coinbase transaction) includes a pointer (i.e. a reference) to such an output in a preceding transaction, and may further include an unlocking script for unlocking the locking script of the pointed-to output. Consider that a pair of transactions may be labelled a first and a second transaction (or "target" transaction). The first transaction includes at least one output specifying an amount of the digital asset, and having a locking script defining one or more conditions of unlocking the output. The second, target transaction has at least one input, including a pointer to the output of the first transaction, and an unlocking script for unlocking the output of the first transaction.

In such a model, when the second, target transaction is sent to the blockchain network to be propagated and recorded in the blockchain, one of the criteria for validity applied at each node will be that the unlocking script meets all of the one or more conditions defined in the locking script of the first transaction. Another will be that the output of the first transaction has not already been redeemed by another, earlier valid transaction. Any node that finds the target transaction invalid according to any of these conditions will not propagate it (as a valid transaction, but possibly to register an invalid transaction) nor include it in a new block to be recorded in the blockchain.

An alternative type of transaction model is an account-based model. In this case each transaction does not define the amount to be transferred by referring back to the UTXO of a preceding transaction in a sequence of past transactions, but rather by reference to an absolute account balance. The current state of all accounts is stored by the nodes separate to the blockchain and is updated constantly.

As blockchain technology is applied to larger and larger numbers of transactions, managing the volume of transactions become challenging. For example, common credit card payment networks, such as Mastercard or Visa's payment networks, collectively typically process thousands of transactions per second. It may be advantageous to have solutions that would enable a blockchain network to manage similar levels of throughput.

## BRIEF DESCRIPTION OF THE DRAWINGS

Reference will now be made, by way of example, to the accompanying drawings which show example embodiments of the present application and in which:

FIG. 1 shows an example system for implementing a blockchain;

FIG. 2 illustrates an example transaction protocol;

FIG. 3A shows an example implementation of a client application;

FIG. 3B shows an example of a user interface for the client application;

FIG. 4 illustrates example node software for a blockchain node;

FIG. 5A shows an example of a Merkle tree;

FIG. 5B shows an example of a "partial" Merkle tree;

FIG. 6 shows an example of a Merkle path;

FIG. 7 diagrammatically shows a simplified example blockchain node for processing a large volume of blockchain transactions;

FIG. 8 shows, in flowchart form, an example method for transaction handling in a blockchain node;

FIG. 9 shows, in flowchart form, an example method for managing unconfirmed transactions when a proof-of-work solution is found; and

FIG. 10 shows an example of a simplified Merkle tree for a first array.

Like reference numerals are used in the drawings to denote like elements and features.

## DETAILED DESCRIPTION OF EXAMPLES

In one aspect, there may be provided a computer-implemented method of blockchain transaction processing in a node, the method may include appending transaction identifiers for validated transactions to an array as an ordered list of transaction identifiers; and determining that the array has reached a maximum size. The method further includes, in response, determining an array summary value for the ordered list of transaction identifiers, adding the ordered list of transaction identifiers to a candidate block containing previously completed ordered lists of transaction identifiers to form a consolidated ordered list of transaction identifiers, using the array summary value and array summary values of the previously completed ordered lists of transaction identifiers to determine a top-level summary value for the consolidated ordered list of transaction identifiers, modifying a block header of the candidate block to include the top-level summary value; and propagating the array on a blockchain network to a plurality of other nodes.

In some implementations, the method may further include, in response to the determining that the array has reached a maximum size, providing header data for the candidate block to one or more mining unit to search for a proof of work. In some cases, each of the one or more mining units receives a partially complete block header and the array summary values, and carries out the operations of determining the top-level summary value and modifying the block header to include the top-level summary value.

In some implementations, the method further includes, in response to the determining that the array has reached a maximum size, initializing a new array to contain a new ordered list of transaction identifiers for subsequently received and validated transactions, and appending the new ordered list of transaction identifiers to the consolidated ordered list of transaction identifiers when the new array has reached the maximum size.

In some implementations, determining that the array has reached a maximum size includes determining that a count of transactions has reached a maximum count, and, optionally, wherein the maximum count is $2^n$ transactions, where $n$ is an integer.

In some implementations, the method may further include receiving a block solution from a mining unit at the node, including a coinbase transaction and a solved block header, propagating the block solution to other nodes on a blockchain network, and initializing a new empty first array.

In some implementations, the method may further include receiving a block solution from another node on the blockchain network, validating the block solution and, in response to validation of the block solution, comparing transaction identifiers from the block solution to transaction identifiers in the consolidated ordered list of transaction identifiers, removing any matching transaction identifiers from the consolidated ordered list of transactions identifiers, and initializing a new first array containing remaining unmatched transactions from the consolidated ordered list of transactions identifiers.

In some cases, the block solution includes an ordered set of array identifiers and a block header, and validating the block solution includes retrieving array data from memory corresponding to the ordered set of array identifiers, wherein the array data includes previously-validated array summary values, determining a block summary value using the previously-validated array summary values, and verifying that the determined block summary value is in the block header.

In some implementations, the method may further include building a first array, wherein the first array includes a placeholder transaction, determining a Merkle path for the placeholder transaction, and propagating the first array to the plurality of other nodes on the blockchain network and, optionally, propagating the Merkle path for the placeholder transaction to the plurality of other nodes on the blockchain. In some cases, the method further includes, at a mining unit, replacing the placeholder transaction with a coinbase transaction and using the Merkle path to determine a first array summary value for the first array.

In some implementations, the method may further include receiving, from another node on the blockchain network, array data including a first array identifier, a first array containing a placeholder transaction, and a Merkle path for the placeholder transaction, validating the Merkle path, and storing the array data in memory in association with the first array identifier.

In some cases, the method may further include receiving a block solution from the another node, the block solution including a coinbase transaction and an ordered set of array identifiers including the first array identifier, retrieving the first array and the Merkle path from memory based on the first array identifier, and determining a first array summary value using the coinbase transaction and the Merkle path. In some cases, the block solution includes a block header and validating the block solution includes retrieving array data from memory corresponding to the ordered set of array identifiers, wherein the array data includes previously-validated array summary values, determining a block summary value using the first array summary value and the previously-validated array summary values, and verifying that the determined block summary value is in the block header.

In some implementations, the summary values are Merkle roots.

In another aspect, there may be provided a computing device implementing a node on a blockchain. The computing device may include memory, one or more processors, and computer-executable instructions that, when executed, cause the processors to carry out one or more of the methods described herein.

In yet another aspect, there may be provided a computer-readable medium storing processor-executable instructions, the processor-executable instructions including instructions that, when executed by one or more processors, cause the processors to carry out at least one of the methods described herein.

Other example embodiments of the present disclosure will be apparent to those of ordinary skill in the art from a review of the following detailed description in conjunction with the drawings.

In the present application, the term "and/or" is intended to cover all possible combinations and sub-combinations of the listed elements, including any one of the listed elements alone, any sub-combination, or all of the listed elements, and without necessarily excluding additional elements.

In the present application, the phrase "at least one of... or..." is intended to cover any one or more of the listed elements, including any one of the listed elements alone, any sub-combination, or all of the elements, without necessarily excluding any additional elements, and without necessarily requiring all of the elements.

### *Example System Overview*

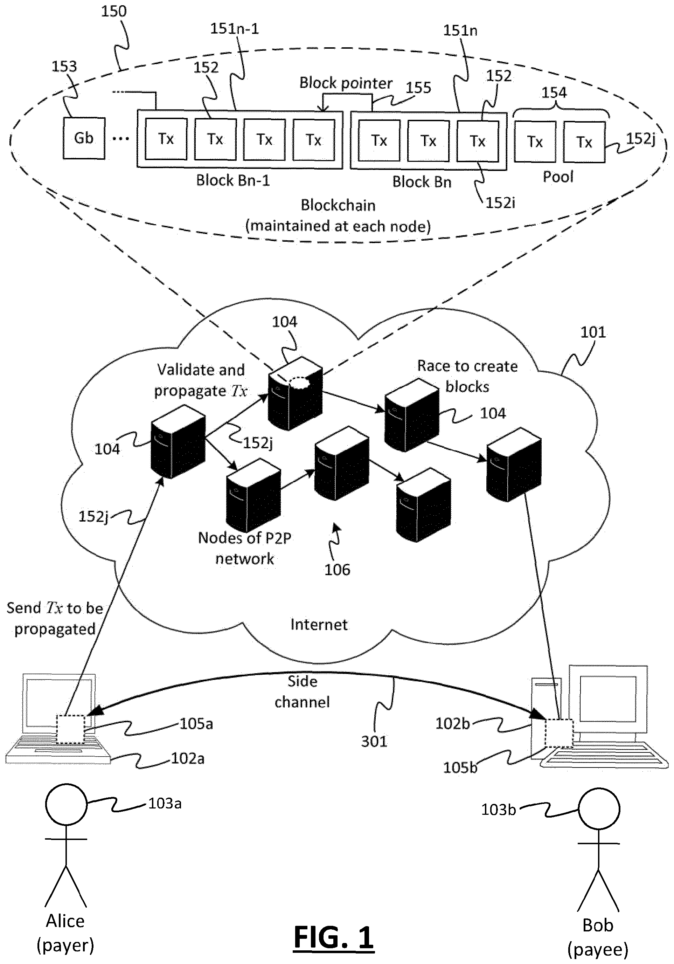

Figure 1 shows an example system 100 for implementing a blockchain 150. The system 100 may include a packet-switched network 101, typically a wide-area internetwork such as the Internet. The packet-switched network 101 includes a plurality of blockchain nodes 104 that may be arranged to form a peer-to-peer (P2P) network 106 within the packet-switched network 101. Whilst not illustrated, the blockchain nodes 104 may be arranged as a near-complete graph. Each blockchain node 104 is therefore highly connected to other blockchain nodes 104.

Each blockchain node 104 includes computer equipment of a peer, with different ones of the nodes 104 belonging to different peers. Each blockchain node 104 includes a processing apparatus implemented by one or more processors, e.g. one or more central processing units (CPUs), accelerator processors, application specific processors and/or field programmable gate arrays (FPGAs), and other equipment such as Application Specific Integrated Circuits (ASICs). Each node also includes memory, i.e. computer-readable storage in the form of a non-transitory computer-readable medium or media. The memory may include one or more memory units employing one or more memory media, e.g. a magnetic medium such as a hard disk; an electronic medium such as a solid-state drive (SSD), flash memory or EEPROM; and/or an optical medium such as an optical disk drive.

The blockchain 150 includes a chain of blocks of data 151, wherein a respective copy of the blockchain 150 is maintained at each of a plurality of blockchain nodes 104 in the distributed or blockchain network 160. As mentioned above, maintaining a copy of the blockchain 150 does not necessarily mean storing the blockchain 150 in full. Instead, the blockchain 150 may be pruned of data so long as each blockchain node 150 stores the blockheader (discussed below) of each block 151. Each block 151 in the chain includes one or more transactions 152, wherein a transaction in this context refers to a kind of data structure. The nature of the data structure will depend on the type of transaction protocol used as part of a transaction model or scheme. A given blockchain will use one particular transaction protocol throughout. In one common type of transaction protocol, the data structure of each transaction 152 has at least one input and at least one output. Each output specifies an amount representing a quantity of a digital asset as property, an example of which is a user 103 to whom the output is cryptographically locked (requiring a signature or other solution of that user in order to be unlocked and thereby redeemed or spent). Each input points back to the output of a preceding transaction 152, thereby linking the transactions.

Each block 151 also includes a block pointer 155 pointing back to the previously created block 151 in the chain so as to define a sequential order to the blocks 151. Each transaction 152 (other than a coinbase transaction) has a pointer back to a previous transaction so as to define an order to sequences of transactions (N.B. sequences of transactions 152 are allowed to branch). The chain of blocks 151 goes all the way back to a genesis block (Gb) 153 which was the first block in the chain. One or more original transactions 152 early on in the chain 150 pointed to the genesis block 153 rather than a preceding transaction.

Each of the blockchain nodes 104 is configured to forward transactions 152 to other blockchain nodes 104, and thereby cause transactions 152 to be propagated throughout the network 106. Each blockchain node 104 is configured to create blocks 151 and to store a respective copy of the same blockchain 150 in their respective memory. Each blockchain node 104 also maintains an ordered set 154 of transactions 152 waiting to be incorporated into blocks 151. The ordered set 154 is often referred to as a "mempool". This term herein is not intended to limit to any particular blockchain, protocol or model. It refers to the ordered set of transactions which a node 104 has accepted as valid and for which the node 104 is obliged not to accept any other transactions attempting to spend the same output.

In a given present transaction 152j, the (or each) input includes a pointer referencing the output of a preceding transaction 152i in the sequence of transactions, specifying that this output is to be redeemed or "spent" in the present transaction 152j. In general, the preceding transaction could be any transaction in the ordered set 154 or any block 151. The preceding transaction 152i need not necessarily exist at the time the present transaction 152j is created or even sent to the network 106, though the preceding transaction 152i will need to exist and be validated in order for the present transaction to be valid. Hence "preceding" herein refers to a predecessor in a logical sequence linked by pointers, not necessarily the time of creation or sending in a temporal sequence, and hence it does not necessarily exclude that the transactions 152i, 152j be created or sent out-of-order (see discussion below on orphan transactions). The preceding transaction 152i could equally be called the antecedent or predecessor transaction.

The input of the present transaction 152j also includes the input authorisation, for example the signature of the user 103a to whom the output of the preceding transaction 152i is locked. In turn, the output of the present transaction 152j can be cryptographically locked to a new user or entity 103b. The present transaction 152j can thus transfer the amount defined in the input of the preceding transaction 152i to the new user or entity 103b as defined in the output of the present transaction 152j. In some cases a transaction 152 may have multiple outputs to split the input amount between multiple users or entities (one of whom could be the original user or entity 103a in order to give change). In some cases a transaction can also have multiple inputs to gather together the amounts from multiple outputs of one or more preceding transactions, and redistribute to one or more outputs of the current transaction.

According to an output-based transaction protocol such as bitcoin, when an entity, such as a user or machine, 103 wishes to enact a new transaction 152j, then the entity sends the new transaction from its computer terminal 102 to a recipient. The entity or the recipient will eventually send this transaction to one or more of the blockchain nodes 104 of the network 106 (which nowadays are typically servers or data centres, but could in principle be other user terminals). It is also not excluded that the entity 103 enacting the new transaction 152j could send the transaction to one or more of the blockchain nodes 104 and, in some examples, not to the recipient. A blockchain node 104 that receives a transaction checks whether the transaction is valid according to a blockchain node protocol which is applied at each of the blockchain nodes 104. The blockchain node protocol typically requires the blockchain node 104 to check that a cryptographic signature in the new transaction 152j matches the expected signature, which depends on the previous transaction 152i in an ordered sequence of transactions 152. In such an output-based transaction protocol, this may include checking that the cryptographic signature or other authorisation of the entity 103 included in the input of the new transaction 152j matches a condition defined in the output of the preceding transaction 152i which the new transaction assigns, wherein this condition typically includes at least checking that the cryptographic signature or other authorisation in the input of the new transaction 152j unlocks the output of the previous transaction 152i to which the input of the new transaction is linked to. The condition may be at least partially defined by a script included in the output of the preceding transaction 152i. Alternatively it could simply be fixed by the blockchain node protocol alone, or it could be due to a combination of these. Either way, if the new transaction 152j is valid, the blockchain node 104 forwards it to one or more other blockchain nodes 104 in the blockchain network 106. These other blockchain nodes 104 apply the same test according to the same blockchain node protocol, and so forward the new transaction 152j on to one or more further nodes 104, and so forth. In this way the new transaction is propagated throughout the network of blockchain nodes 104.

In an output-based model, the definition of whether a given output (e.g. UTXO) is assigned is whether it has yet been validly redeemed by the input of another, onward transaction 152j according to the blockchain node protocol. Another condition for a transaction to be valid is that the output of the preceding transaction 152i which it attempts to assign or redeem has not already been assigned/redeemed by another transaction. Again if not valid, the transaction 152j will not be propagated (unless flagged as invalid and propagated for alerting) or recorded in the blockchain 150. This guards against double-spending whereby the transactor tries to assign the output of the same transaction more than once. An account-based model on the other hand guards against double-spending by maintaining an account balance. Because again there is a defined order of transactions, the account balance has a single defined state at any one time.

In addition to validating transactions, blockchain nodes 104 also race to be the first to create blocks of transactions in a process commonly referred to as mining, which is supported by "proof-of-work". At a blockchain node 104, new transactions are added to an ordered set 154 of valid transactions that have not yet appeared in a block 151 recorded on the blockchain 150. The blockchain nodes then race to assemble a new valid block 151 of transactions 152 from the ordered set of transactions 154 by attempting to solve a cryptographic puzzle. Typically this inlcudes searching for a "nonce" value such that when the nonce is concatenated with a representation of the ordered set of transactions 154 and hashed, then the output of the hash meets a predetermined condition. For example, the predetermined condition may be that the output of the hash has a certain predefined number of leading zeros. Note that this is just one particular type of proof-of-work puzzle, and other types are not excluded. A property of a hash function is that it has an unpredictable output with respect to its input. Therefore this search can only be performed by brute force, thus consuming a substantive amount of processing resource at each blockchain node 104 that is trying to solve the puzzle.

The first blockchain node 104 to solve the puzzle announces this to the network 106, providing the solution as proof which can then be easily checked by the other blockchain nodes 104 in the network (once given the solution to a hash it is straightforward to check that it causes the output of the hash to meet the condition). The first blockchain node 104 propagates a block to a threshold consensus of other nodes that accept the block and thus enforce the protocol rules. The ordered set of transactions 154 then becomes recorded as a new block 151 in the blockchain 150 by each of the blockchain nodes 104. A block pointer 155 is also assigned to the new block 151n pointing back to the previously created block 151n-1 in the chain. A significant amount of effort, for example in the form of hash, required to create a proof-of-work solution signals the intent of the first node 104 to follow the rules of the blockchain protocol. Such rules include not accepting a transaction as valid if it assigns the same output as a previously validated transaction, otherwise known as double-spending. Once created, the block 151 cannot be modified since it is recognized and maintained at each of the blockchain nodes 104 in the blockchain network 106. The block pointer 155 also imposes a sequential order to the blocks 151. Since the transactions 152 are recorded in the ordered blocks at each blockchain node 104 in a network 106, this therefore provides an immutable public ledger of the transactions.

Note that different blockchain nodes 104 racing to solve the puzzle at any given time may be doing so based on different snapshots of the ordered set of yet to be published transactions 154 at any given time, depending on when they started searching for a solution or the order in which the transactions were received. Whoever solves their respective puzzle first defines which transactions 152 are included in the next new block 151n and in which order, and the current set 154 of unpublished transactions is updated. The blockchain nodes 104 then continue to race to create a block from the newly-defined outstanding ordered set of unpublished transactions 154, and so forth. A protocol also exists for resolving any "fork" that may arise, which is where two blockchain nodes 104 solve their puzzle within a very short time of one another such that a conflicting view of the blockchain gets propagated between nodes 104. In short, whichever prong of the fork grows the longest becomes the definitive blockchain 150. Note this should not affect the users or agents of the network as the same transactions will appear in both forks.

According to the bitcoin blockchain (and most other blockchains) a node that successfully constructs a new block 104 is granted the ability to assign an accepted amount of the digital asset in a new special kind of transaction which distributes a defined quantity of the digital asset (as opposed to an inter-agent, or inter-user transaction which transfers an amount of the digital asset from one agent or user to another). This special type of transaction is usually referred to as a "coinbase transaction", but may also be termed an "initiation transaction". It typically forms the first transaction of the new block 151n. The proof-of-work signals the intent of the node that constructs the new block to follow the protocol rules allowing this special transaction to be redeemed later. The blockchain protocol rules may require a maturity period, for example 100 blocks, before this special transaction may be redeemed. Often a regular (non-generation) transaction 152 will also specify an additional transaction fee in one of its outputs, to further reward the blockchain node 104 that created the block 151n in which that transaction was published. This fee is normally referred to as the "transaction fee", and is discussed blow.

Due to the resources involved in transaction validation and publication, typically at least each of the blockchain nodes 104 takes the form of a server that includes one or more physical server units, or even whole a data centre. However in principle any given blockchain node 104 could take the form of a user terminal or a group of user terminals networked together.

The memory of each blockchain node 104 stores software configured to run on the processing apparatus of the blockchain node 104 in order to perform its respective role or roles and handle transactions 152 in accordance with the blockchain node protocol. It will be understood that any action attributed herein to a blockchain node 104 may be performed by the software run on the processing apparatus of the respective computer equipment. The node software may be implemented in one or more applications at the application layer, or a lower layer such as the operating system layer or a protocol layer, or any combination of these.

Also connected to the network 101 is the computer equipment 102 of each of a plurality of parties 103 in the role of consuming users. These users may interact with the blockchain network but do not participate in validating, constructing or propagating transactions and blocks. Some of these users or agents 103 may act as senders and recipients in transactions. Other users may interact with the blockchain 150 without necessarily acting as senders or recipients. For instance, some parties may act as storage entities that store a copy of the blockchain 150 (e.g. having obtained a copy of the blockchain from a blockchain node 104).

Some or all of the parties 103 may be connected as part of a different network, e.g. a network overlaid on top of the blockchain network 106. Users of the blockchain network (often referred to as "clients") may be said to be part of a system that includes the blockchain network; however, these users are not blockchain nodes 104 as they do not perform the roles required of the blockchain nodes. Instead, each party 103 may interact with the blockchain network 106 and thereby utilize the blockchain 150 by connecting to (i.e. communicating with) a blockchain node 106. Two parties 103 and their respective equipment 102 are shown for illustrative purposes: a first party 103a and his/her respective computer equipment 102a, and a second party 103b and his/her respective computer equipment 102b. It will be understood that many more such parties 103 and their respective computer equipment 102 may be present and participating in the system 100, but for convenience they are not illustrated. Each party 103 may be an individual or an organization. Purely by way of illustration the first party 103a is referred to herein as Alice and the second party 103b is referred to as Bob, but it will be appreciated that this is not limiting and any reference herein to Alice or Bob may be replaced with "first party" and "second "party" respectively.

The computer equipment 102 of each party 103 comprises respective processing apparatus including one or more processors, e.g. one or more CPUs, GPUs, other accelerator processors, application specific processors, and/or FPGAs. The computer equipment 102 of each party 103 further includes memory, i.e. computer-readable storage in the form of a non-transitory computer-readable medium or media. This memory may include one or more memory units employing one or more memory media, e.g. a magnetic medium such as hard disk; an electronic medium such as an SSD, flash memory or EEPROM; and/or an optical medium such as an optical disc drive. The memory on the computer equipment 102 of each party 103 stores software such as a respective instance of at least one client application 105 arranged to run on the processing apparatus. It will be understood that any action attributed herein to a given party 103 may be performed using the software run on the processing apparatus of the respective computer equipment 102. The computer equipment 102 of each party 103 includes at least one user terminal, e.g. a desktop or laptop computer, a tablet, a smartphone, or a wearable device such as a smartwatch. The computer equipment 102 of a given party 103 may also include one or more other networked resources, such as cloud computing resources accessed via the user terminal.

The client application 105 may be initially provided to the computer equipment 102 of any given party 103 on suitable computer-readable storage medium or media, e.g. downloaded from a server, or provided on a removable storage device such as a removable SSD, flash memory key, removable EEPROM, removable magnetic disk drive, magnetic floppy disk or tape, optical disk such as a CD or DVD ROM, or a removable optical drive, etc.

The client application 105 includes at least a "wallet" function. This has two main functionalities. One of these is to enable the respective party 103 to create, authorise (for example sign) and send transactions 152 to one or more bitcoin nodes 104 to then be propagated throughout the network of blockchain nodes 104 and thereby included in the blockchain 150. The other is to report back to the respective party the amount of the digital asset that he or she currently owns. In an output-based system, this second functionality includes collating the amounts defined in the outputs of the various 152 transactions scattered throughout the blockchain 150 that belong to the party in question.

It will be understood that whilst the various client functionality may be described as being integrated into a given client application 105, this is not necessarily limiting and instead any client functionality described herein may instead be implemented in a suite of two or more distinct applications, e.g. interfacing via an API, or one being a plug-in to the other. More generally the client functionality could be implemented at the application layer or a lower layer such as the operating system, or any combination of these. The following will be described in terms of a client application 105 but it will be appreciated that this is not limiting.

The instance of the client application or software 105 on each computer equipment 102 is operatively coupled to at least one of the blockchain nodes 104 of the network 106. This enables the wallet function of the client 105 to send transactions 152 to the network 106. The client 105 is also able to contact blockchain nodes 104 in order to query the blockchain 150 for any transactions of which the respective party 103 is the recipient (or indeed inspect other parties' transactions in the blockchain 150, since in embodiments the blockchain 150 is a public facility which provides trust in transactions in part through its public visibility). The wallet function on each computer equipment 102 is configured to formulate and send transactions 152 according to a transaction protocol. As set out above, each blockchain node 104 runs software configured to validate transactions 152 according to the blockchain node protocol, and to forward transactions 152 in order to propagate them throughout the blockchain network 106. The transaction protocol and the node protocol correspond to one another, and a given transaction protocol goes with a given node protocol, together implementing a given transaction model. The same transaction protocol is used for all transactions 152 in the blockchain 150. The same node protocol is used by all the nodes 104 in the network 106.

When a given party 103, say Alice, wishes to send a new transaction 152j to be included in the blockchain 150, then she formulates the new transaction in accordance with the relevant transaction protocol (using the wallet function in her client application 105). She then sends the transaction 152 from the client application 105 to one or more blockchain nodes 104 to which she is connected. E.g. this could be the blockchain node 104 that is best connected to Alice's computer 102. When any given blockchain node 104 receives a new transaction 152j, it handles it in accordance with the blockchain node protocol and its respective role. This may include first checking whether the newly received transaction 152j meets a certain condition for being "valid", examples of which will be discussed in more detail shortly. In some transaction protocols, the condition for validation may be configurable on a per-transaction basis by scripts included in the transactions 152. Alternatively the condition could simply be a built-in feature of the node protocol, or be defined by a combination of the script and the node protocol.

On condition that the newly received transaction 152j passes the test for being deemed valid (i.e. on condition that it is "validated"), any blockchain node 104 that receives the transaction 152j will add the new validated transaction 152 to the ordered set of transactions 154 maintained at that blockchain node 104. Further, any blockchain node 104 that receives the transaction 152j will propagate the validated transaction 152 onward to one or more other blockchain nodes 104 in the network 106. Since each blockchain node 104 applies the same protocol, then assuming the transaction 152j is valid, this means it will soon be propagated throughout the whole network 106.

Once admitted to the ordered set of transactions 154 maintained at a given blockchain node 104, that blockchain node 104 will start competing to solve the proof-of-work puzzle on the latest version of their respective ordered set of transactions 154 including the new transaction 152 (recall that other blockchain nodes 104 may be trying to solve the puzzle based on a different ordered set of transactions 154, but whoever gets there first will define the ordered set of transactions that are included in the latest block 151, and eventually a blockchain node 104 will solve the puzzle for a part of the ordered set 154 which includes Alice's transaction 152j). Once the proof-of-work has been done for the ordered set 154 including the new transaction 152j, it immutably becomes part of one of the blocks 151 in the blockchain 150. Each transaction 152 includes a pointer back to an earlier transaction, so the order of the transactions is also immutably recorded.

Different blockchain nodes 104 may receive different instances of a given transaction first and therefore have conflicting views of which instance is 'valid' before one instance is published in a new block 151, at which point all blockchain nodes 104 agree that the published instance is the only valid instance. If a blockchain node 104 accepts one instance as valid, and then discovers that a second instance has been recorded in the blockchain 150 then that blockchain node 104 must accept this and will discard (i.e. treat as invalid) the instance which it had initially accepted (i.e. the one that has not been published in a block 151).

An alternative type of transaction protocol operated by some blockchain networks may be referred to as an "account-based" protocol, as part of an account-based transaction model. In the account-based case, each transaction does not define the amount to be transferred by referring back to the UTXO of a preceding transaction in a sequence of past transactions, but rather by reference to an absolute account balance. The current state of all accounts is stored, by the nodes of that network, separate to the blockchain and is updated constantly. In such a system, transactions are ordered using a running transaction tally of the account (also called the "position"). This value is signed by the sender as part of their cryptographic signature and is hashed as part of the transaction reference calculation. In addition, an optional data field may also be signed the transaction. This data field may point back to a previous transaction, for example if the previous transaction ID is included in the data field.

### UTXO-based Model

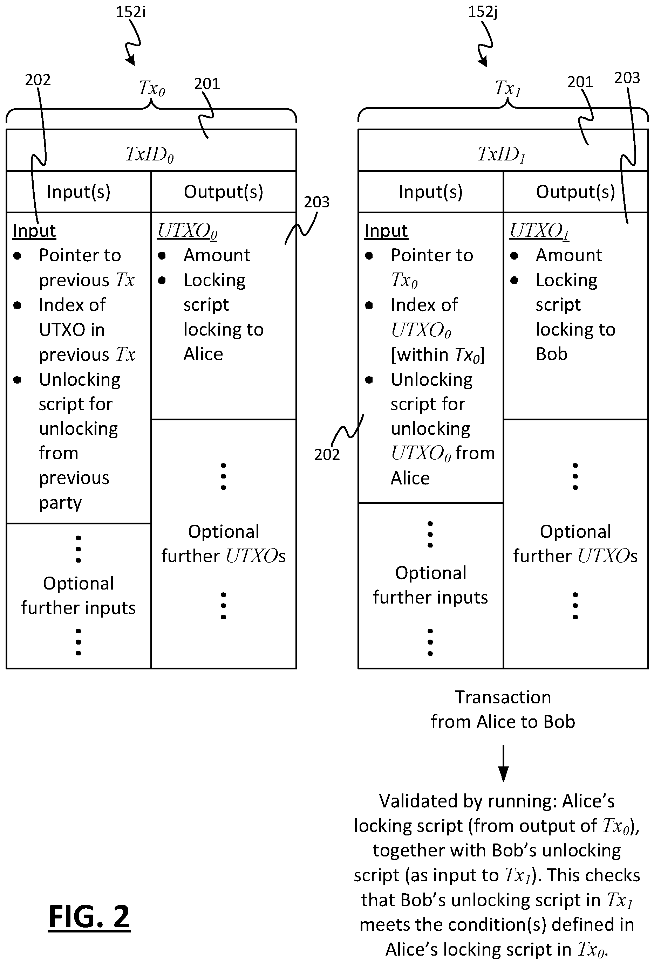

Figure 2 illustrates an example transaction protocol. This is an example of a UTXO-based protocol. A transaction 152 (abbreviated "Tx") is the fundamental data structure of the blockchain 150 (each block 151 containing one or more transactions 152). The following will be described by reference to an output-based or "UTXO" based protocol. However, this is not limiting to all possible embodiments. Note that while the example UTXO-based protocol is described with reference to bitcoin, it may equally be implemented on other example blockchain networks.

In a UTXO-based model, each transaction ("Tx") 152 is a data structure having one or more inputs 202, and one or more outputs 203. Each output 203 may include an unspent transaction output (UTXO), which can be used as the source for the input 202 of another new transaction (if the UTXO has not already been redeemed). The UTXO includes a value specifying an amount of a digital asset. This represents a set number of tokens on the distributed ledger. The UTXO may also contain the transaction ID of the transaction from which it came, amongst other information. The transaction data structure may also include a header 201, which may include an indicator of the size of the input field(s) 202 and output field(s) 203. The header 201 may also include an ID of the transaction. In some embodiments, the transaction ID is the hash of the transaction data (excluding the transaction ID itself) and stored in the header 201 of the raw transaction 152 submitted to the nodes 104.

Say Alice 103a wishes to create a transaction 152j transferring an amount of the digital asset in question to Bob 103b. In Figure 2 Alice's new transaction 152j is labelled "$Tx_1$". It takes an amount of the digital asset that is locked to Alice in the output 203 of a preceding transaction 152i in the sequence, and transfers at least some of this to Bob. The preceding transaction 152i is labelled "$Tx_0$" in Figure 2. $Tx_0$ and $Tx_1$ are just arbitrary labels. They do not necessarily mean that $Tx_0$ is the first transaction in the blockchain 151, nor that $Tx_1$ is the immediate next transaction in the pool 154. $Tx_1$ could point back to any preceding (i.e. antecedent) transaction that still has an unspent output 203 locked to Alice.

The preceding transaction $Tx_0$ may already have been validated and included in a block 151 of the blockchain 150 at the time when Alice creates her new transaction $Tx_1$, or at least by the time she sends it to the network 106. It may already have been included in one of the blocks 151 at that time, or it may be still waiting in the ordered set 154 in which case it will soon be included in a new block 151. Alternatively $Tx_0$ and $Tx_1$ could be created and sent to the network 106 together, or $Tx_0$ could even be sent after $Tx_1$ if the node protocol allows for buffering "orphan" transactions. The terms "preceding" and "subsequent" as used herein in the context of the sequence of transactions refer to the order of the transactions in the sequence as defined by the transaction pointers specified in the transactions (which transaction points back to which other transaction, and so forth). They could equally be replaced with "predecessor" and "successor", or "antecedent" and "descendant", "parent" and "child", or such like. It does not necessarily imply an order in which they are created, sent to the network 106, or arrive at any given blockchain node 104. Nevertheless, a subsequent transaction (the descendent transaction or "child") which points to a preceding transaction (the antecedent transaction or "parent") will not be validated until and unless the parent transaction is validated. A child that arrives at a blockchain node 104 before its parent is considered an orphan. It may be discarded or buffered for a certain time to wait for the parent, depending on the node protocol and/or node behaviour.

One of the one or more outputs 203 of the preceding transaction $Tx_0$ is a particular UTXO, labelled here $UTXO_0$. Each UTXO includes a value specifying an amount of the digital asset represented by the UTXO, and a locking script which defines a condition which must be met by an unlocking script in the input 202 of a subsequent transaction in order for the subsequent transaction to be validated, and therefore for the UTXO to be successfully redeemed. Typically the locking script locks the amount to a particular party (the beneficiary of the transaction in which it is included). That is, the locking script defines an unlocking condition, typically include a condition that the unlocking script in the input of the subsequent transaction include the cryptographic signature of the party to whom the preceding transaction is locked.

The locking script (aka scriptPubKey) is a piece of code written in the domain specific language recognized by the node protocol. A particular example of such a language is called "Script" (capital S) which is used by the blockchain network. The locking script specifies what information is required to spend a transaction output 203, for example the requirement of Alice's signature. Unlocking scripts appear in the outputs of transactions. The unlocking script (aka scriptSig) is a piece of code written the domain specific language that provides the information required to satisfy the locking script criteria. For example, it may contain Bob's signature. Unlocking scripts appear in the input 202 of transactions.

So in the example illustrated, $UTXO_0$ in the output 203 of $Tx_0$ includes a locking script [Checksig $P_A$] which requires a signature Sig $P_A$ of Alice in order for $UTXO_0$ to be redeemed (strictly, in order for a subsequent transaction attempting to redeem $UTXO_0$ to be valid). [Checksig $P_A$] contains a representation (i.e. a hash) of the public key $P_A$ from a public-private key pair of Alice. The input 202 of $Tx_1$ includes a pointer pointing back to $Tx_0$ (e.g. by means of its transaction ID, $TxID_0$, which in some embodiments is the hash of the whole transaction $Tx_0$). The input 202 of $Tx_1$ includes an index

identifying $UTXO_0$ within $Tx_0$, to identify it amongst any other possible outputs of $Tx_0$. The input 202 of $Tx_1$ further includes an unlocking script <Sig $P_A$> which has a cryptographic signature of Alice, created by Alice applying her private key from the key pair to a predefined portion of data (sometimes called the "message" in cryptography). The data (or "message") that needs to be signed by Alice to provide a valid signature may be defined by the locking script, or by the node protocol, or by a combination of these.

When the new transaction $Tx_1$ arrives at a blockchain node 104, the node applies the node protocol. This may include running the locking script and unlocking script together to check whether the unlocking script meets the condition defined in the locking script (where this condition may include one or more criteria). In some embodiments this may involve concatenating the two scripts:

$$\text{<Sig } P_A\text{> <}P_A\text{> } \| \text{ [Checksig } P_A\text{]}$$

where "∥" represents a concatenation and "<... >" means place the data on the stack, and "[...]" is a function carried out by the locking script (in this example a stack-based language). Equivalently the scripts may be run one after the other, with a common stack, rather than concatenating the scripts. Either way, when run together, the scripts use the public key $P_A$ of Alice, as included in the locking script in the output of $Tx_0$, to authenticate that the unlocking script in the input of $Tx_1$ contains the signature of Alice signing the expected portion of data. The expected portion of data itself (the "message") also needs to be included in order to perform this authentication. In embodiments the signed data includes the whole of $Tx_1$ (so a separate element does not need to be included specifying the signed portion of data in the clear, as it is already inherently present).

The details of authentication by public-private cryptography will be familiar to a person skilled in the art. Basically, if Alice has signed a message using her private key, then given Alice's public key and the message in the clear, another entity such as a node 104 is able to authenticate that the message must have been signed by Alice. Signing typically includes hashing the message, signing the hash, and tagging this onto the message as a signature, thus enabling any holder of the public key to authenticate the signature. Note therefore that any reference herein to signing a particular piece of data or part of a transaction, or such like, can in embodiments mean signing a hash of that piece of data or part of the transaction.

If the unlocking script in $Tx_1$ meets the one or more conditions specified in the locking script of $Tx_0$ (so in the example shown, if Alice's signature is provided in $Tx_1$ and authenticated), then the blockchain node 104 deems $Tx_1$ valid. This means that the blockchain node 104 will add $Tx_1$ to the ordered set of transactions 154. The blockchain node 104 will also forward the transaction $Tx_1$ to one or more other blockchain nodes 104 in the network 106, so that it will be propagated throughout the network 106. Once $Tx_1$ has been validated and included in the blockchain 150, this defines $UTXO_0$ from $Tx_0$ as spent. Note that $Tx_1$ can only be valid if it spends an unspent transaction output 203. If it attempts to spend an output that has already been spent by another transaction 152, then $Tx_1$ will be invalid even if all the other conditions are met. Hence the blockchain node 104 also needs to check whether the referenced UTXO in the preceding transaction $Tx_0$ is already spent (i.e. whether it has already formed a valid input to another valid transaction). This is one reason why it is important for the blockchain 150 to impose a defined order on the transactions 152. In practice, a given blockchain node 104 may maintain a separate database marking which UTXOs 203 in which transactions 152 have been spent, but ultimately what defines whether a UTXO has been spent is whether it has already formed a valid input to another valid transaction in the blockchain 150.

If the total amount specified in all the outputs 203 of a given transaction 152 is greater than the total amount pointed to by all its inputs 202, this is another basis for invalidity in most transaction models. Therefore such transactions will not be propagated nor included in a block 151.

Note that in UTXO-based transaction models, a given UTXO needs to be spent as a whole. It cannot "leave behind" a fraction of the amount defined in the UTXO as spent while another fraction is spent. However, the amount from the UTXO can be split between multiple outputs of the next transaction. For example, the amount defined in $UTXO_0$ in $Tx_0$ can be split between multiple UTXOs in $Tx_1$. Hence if Alice does not want to give Bob all of the amount defined in $UTXO_0$, she can use the remainder to give herself change in a second output of $Tx_1$, or pay another party.

In practice Alice will also usually need to include a fee for the bitcoin node that publishes her transaction 104. If Alice does not include such a fee, $Tx_0$ may be rejected by the blockchain nodes 104, and hence although technically valid, may not be propagated and included in the blockchain 150 (the node protocol does not force blockchain nodes 104 to accept transactions 152 if they don't want). In some protocols, the transaction fee does not require its own separate output 203 (i.e. does not need a separate UTXO). Instead any difference between the total amount pointed to by the input(s) 202 and the total amount of specified in the output(s) 203 of a given transaction 152 is automatically given to the blockchain node 104 publishing the transaction. For example, say a pointer to $UTXO_0$ is the only input to $Tx_1$, and $Tx_1$ has only one output $UTXO_1$. If the amount of the digital asset specified in $UTXO_0$ is greater than the amount specified in $UTXO_1$, then the difference may be assigned by the node 104 that publishes the block containing $UTXO_1$. Alternatively or additionally however, it is not necessarily excluded that a transaction fee could be specified explicitly in its own one of the UTXOs 203 of the transaction 152.

Alice and Bob's digital assets consist of the UTXOs locked to them in any transactions 152 anywhere in the blockchain 150. Hence, typically, the assets of a given party 103 are scattered throughout the UTXOs of various transactions 152 throughout the blockchain 150. There is no one number stored anywhere in the blockchain 150 that defines the total balance of a given party 103. It is the role of the wallet function in the client application 105 to collate together the values of all the various UTXOs which are locked to the respective party and have not yet been spent in another onward transaction. It can do this by querying the copy of the blockchain 150 as stored at any of the bitcoin nodes 104.

Note that the script code is often represented schematically (i.e. not using the exact language). For example, one may use operation codes (opcodes) to represent a particular function. "OP_..." refers to a particular opcode of the Script language. As an example, OP_RETURN is an opcode of the Script language that when preceded by OP_FALSE at the beginning of a locking script creates an unspendable output of a transaction that can store data within the transaction, and thereby record the data immutably in the blockchain 150. For example, the data could include a document which it is desired to store in the blockchain.

Typically an input of a transaction contains a digital signature corresponding to a public key $P_A$. In embodiments this is based on the ECDSA using the elliptic curve secp256k1. A digital signature signs a particular piece of data. In some embodiments, for a given transaction the signature will sign part of the transaction input, and some or all of the transaction outputs. The particular parts of the outputs it signs depends on the SIGHASH flag. The SIGHASH flag is usually a 4-byte code included at the end of a signature to select which outputs are signed (and thus fixed at the time of signing).

The locking script is sometimes called "scriptPubKey" referring to the fact that it typically includes the public key of the party to whom the respective transaction is locked. The unlocking script is sometimes called "scriptSig" referring to the fact that it typically supplies the corresponding signature. However, more generally it is not essential in all applications of a blockchain 150 that the condition for a UTXO to be redeemed includes authenticating a signature. More generally the scripting language could be used to define any one or more conditions. Hence the more general terms "locking script" and "unlocking script" may be preferred.

As shown in Figure 1, the client application on each of Alice and Bob's computer equipment 102a, 120b, respectively, may include additional communication functionality. This additional functionality enables Alice 103a to establish a separate side channel 301 with Bob 103b (at the instigation of either party or a third party). The side channel 301 enables exchange of data separately from the blockchain network. Such communication is sometimes referred to as "off-chain" communication. For instance this may be used to exchange a transaction 152 between Alice and Bob without the transaction (yet) being registered onto the blockchain network 106 or making its way onto the chain 150, until one of the parties chooses to broadcast it to the network 106. Sharing a transaction in this way is sometimes referred to as sharing a "transaction template". A transaction template may lack one or more inputs and/or outputs that are required in order to form a complete transaction. Alternatively or additionally, the side channel 301 may be used to exchange any other transaction related data, such as keys, negotiated amounts or terms, data content, etc.

The side channel 301 may be established via the same packet-switched network 101 as the blockchain network 106. Alternatively or additionally, the side channel 301 may be established via a different network such as a mobile cellular network, or a local area network such as a local wireless network, or even a direct wired or wireless link between Alice and Bob's devices 102a, 102b. Generally, the side channel 301 as referred to anywhere herein may include any one or more links via one or more networking technologies or communication media for exchanging data "off-chain", i.e. separately from the blockchain network 106. Where more than one link is used, then the bundle or collection of off-chain links as a whole may be referred to as the side channel 301. Note therefore that if it is said that Alice and Bob exchange certain pieces of information or data, or such like, over the side channel 301, then this does not necessarily imply all these pieces of data have to be send over exactly the same link or even the same type of network.

### Client Software

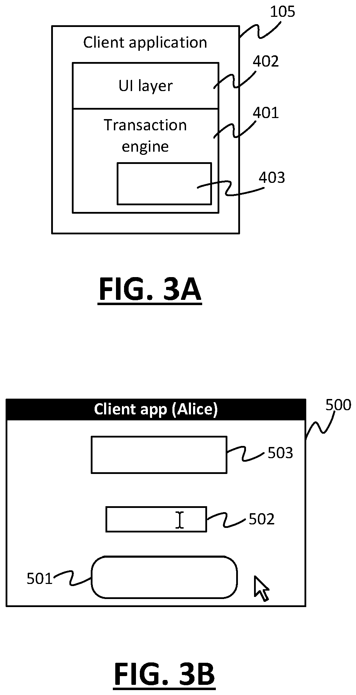

Figure 3A illustrates an example implementation of the client application 105 for implementing embodiments of the presently disclosed scheme. The client application 105 may include a transaction engine 401 and a user interface (UI) layer 402. The transaction engine 401 is configured to implement the underlying transaction-related functionality of the client 105, such as to formulate transactions 152, receive and/or send transactions and/or other data over the side channel 301, and/or send transactions to one or more nodes 104 to be propagated through the blockchain network 106, in accordance with the processes discussed above.

The UI layer 402 is configured to render a user interface via a user input/output (I/O) means of the respective user's computer equipment 102, including outputting information to the respective user 103 via a user output means of the equipment 102, and receiving inputs back from the respective user 103 via a user input means of the equipment 102. For example the user output means could include one or more display screens (touch or non-touch screen) for providing a visual output, one or more speakers for providing an audio output, and/or one or more haptic output devices for providing a tactile output, etc. The user input means could include for example the input array of one or more touch screens (the same or different as that/those used for the output means); one or more cursor-based devices such as mouse, trackpad or trackball; one or more microphones and speech or voice recognition algorithms for receiving a speech or vocal input; one or more gesture-based input devices for receiving the input in the form of manual or bodily gestures; or one or more mechanical buttons, switches or joysticks, etc.

Note that whilst the various functionality herein may be described as being integrated into the same client application 105, this is not necessarily limiting and instead they could be implemented in a suite of two or more distinct applications, e.g. one being a plug-in to the other or interfacing via an API (application programming interface). For instance, the functionality of the transaction engine 401 may be implemented in a separate application than the UI layer 402, or the functionality of a given module such as the transaction engine 401 could be split between more than one application. Nor is it excluded that some or all of the described functionality could be implemented at, say, the operating system layer. Where reference is made anywhere herein to a single or given application 105, or such like, it will be appreciated that this is just by way of example, and more generally the described functionality could be implemented in any form of software.

Figure 3B gives a mock-up of an example of the user interface (UI) 500 which may be rendered by the UI layer 402 of the client application 105a on Alice's equipment 102a. It will be appreciated that a similar UI may be rendered by the client 105b on Bob's equipment 102b, or that of any other party.

By way of illustration Figure 3B shows the UI 500 from Alice's perspective. The UI 500 may include one or more UI elements 501, 502, 502 rendered as distinct UI elements via the user output means.

For example, the UI elements may include one or more user-selectable elements 501 which may be, such as different on-screen buttons, or different options in a menu, or such like. The user input means is arranged to enable the user 103 (in this case Alice 103a) to select or otherwise operate one of the options, such as by clicking or touching the UI element on-screen, or speaking a name of the desired option (N.B. the term "manual" as used herein is meant only to contrast against automatic, and does not necessarily limit to the use of the hand or hands).

Alternatively or additionally, the UI elements may include one or more data entry fields 502. These data entry fields 502 are rendered via the user output means, e.g. on-screen, and the data can be entered into the fields through the user input means, e.g. a keyboard or touchscreen. Alternatively the data could be received orally for example based on speech recognition.

Alternatively or additionally, the UI elements may include one or more information elements 503 output to output information to the user. For example, the information could be rendered on screen or audibly.

It will be appreciated that the particular means of rendering the various UI elements, selecting the options and entering data is not material. The functionality of these UI elements will be discussed in more detail shortly. It will also be appreciated that the UI 500 shown in Figure 3B is only a schematized mock-up and in practice it may include one or more further UI elements, which for conciseness are not illustrated.

### Node Software

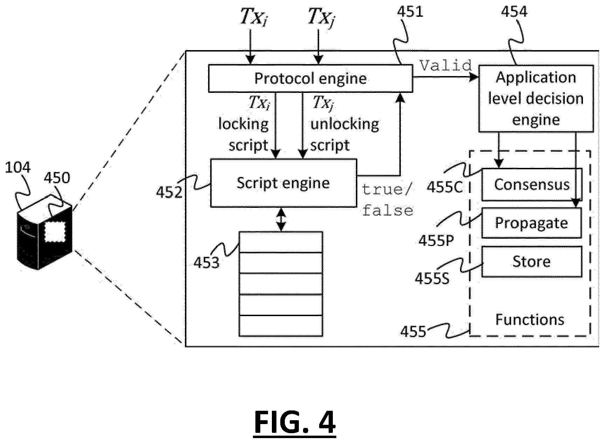

Figure 4 illustrates an example of the node software 450 that is run on each blockchain node 104 of the network 106, in the example of a UTXO- or output-based model. Note that another entity may run node software 450 without being classed as a node 104 on the network 106, i.e. without performing the actions required of a node 104. The node software 450 may contain, but is not limited to, a protocol engine 451, a script engine 452, a stack 453, an application-level decision engine 454, and a set of one or more blockchain-related functional modules 455. Each node 104 may run node software that contains, but is not limited to, all three of: a consensus module 455C (for example, proof-of-work), a propagation module 455P and a storage module 455S (for example, a database). The protocol engine 401 is typically configured to recognize the different fields of a transaction 152 and process them in accordance with the node protocol. When a transaction 152j ($Tx_j$) is received having an input pointing to an output (e.g. UTXO) of another, preceding transaction 152i ($Tx_{m-1}$), then the protocol engine 451 identifies the unlocking script in $Tx_j$ and passes it to the script engine 452. The protocol engine 451 also identifies and retrieves $Tx_i$ based on the pointer in the input of $Tx_j$. $Tx_i$ may be published on the blockchain 150, in which case the protocol engine may retrieve $Tx_i$ from a copy of a block 151 of the blockchain 150 stored at the node 104. Alternatively, $Tx_i$ may yet to have been published on the blockchain 150. In that case, the protocol engine 451 may retrieve $Tx_i$ from the ordered set 154 of unpublished transactions maintained by the node 104. Either way, the script engine 451 identifies the locking script in the referenced output of $Tx_i$ and passes this to the script engine 452.

The script engine 452 thus has the locking script of $Tx_i$ and the unlocking script from the corresponding input of $Tx_j$. For example, transactions labelled $Tx_0$ and $Tx_1$ are illustrated in Figure 2, but the same could apply for any pair of transactions. The script engine 452 runs the two scripts together as discussed previously, which will include placing data onto and retrieving data from the stack 453 in accordance with the stack-based scripting language being used (e.g. Script).

By running the scripts together, the script engine 452 determines whether or not the unlocking script meets the one or more criteria defined in the locking script - i.e. does it "unlock" the output in which the locking script is included? The script engine 452 returns a result of this determination to the protocol engine 451. If the script engine 452 determines that the unlocking script does meet the one or more criteria specified in the corresponding locking script, then it returns the result "true". Otherwise it returns the result "false".

In an output-based model, the result "true" from the script engine 452 is one of the conditions for validity of the transaction. Typically there are also one or more further, protocol-level conditions evaluated by the protocol engine 451 that must be met as well; such as that the total amount of digital asset specified in the output(s) of $Tx_j$ does not exceed the total amount pointed to by its inputs, and that the pointed-to output of $Tx_i$ has not already been spent by another valid transaction. The protocol engine 451 evaluates the result from the script engine 452 together with the one or more protocol-level conditions, and only if they are all true does it validate the transaction $Tx_j$. The protocol engine 451 outputs an indication of whether the transaction is valid to the application-level decision engine 454. Only on condition that $Tx_j$ is indeed validated, the decision engine 454 may select to control both of the consensus module 455C and the propagation module 455P to perform their respective blockchain-related function in respect of $Tx_j$. This may include the consensus module 455C adding $Tx_j$ to the node's respective ordered set of transactions 154 for incorporating in a block 151, and the propagation module 455P forwarding $Tx_j$ to another blockchain node 104 in the network 106. Optionally, in embodiments the application-level decision engine 454 may apply one or more additional conditions before triggering either or both of these functions. For example, the decision engine may only select to publish the transaction on condition that the transaction is both valid and leaves enough of a transaction fee.

Note also that the terms "true" and "false" herein do not necessarily limit to returning a result represented in the form of only a single binary digit (bit), though that is certainly one possible implementation. More generally, "true" can refer to any state indicative of a successful or affirmative outcome, and "false" can refer to any state indicative of an unsuccessful or non-affirmative outcome. For instance in an account-based model, a result of "true" could be indicated by a combination of an implicit, protocol-level validation of a signature and an additional affirmative output of a smart contract (the overall result being deemed to signal true if both individual outcomes are true).

Other variants or use cases of the disclosed techniques may become apparent to the person skilled in the art once given the disclosure herein. The scope of the disclosure is not limited by the described embodiments but only by the accompanying claims.

For instance, some embodiments above have been described in terms of a bitcoin network 106, bitcoin blockchain 150 and bitcoin nodes 104. However it will be appreciated that the bitcoin blockchain is one particular example of a blockchain 150 and the above description may apply generally to any blockchain. That is, the present invention is in by no way limited to the bitcoin blockchain. More generally, any reference above to bitcoin network 106, bitcoin blockchain 150 and bitcoin nodes 104 may be replaced with reference to a blockchain network 106, blockchain 150 and blockchain node 104 respectively. The blockchain, blockchain network and/or blockchain nodes may share some or all of the described properties of the bitcoin blockchain 150, bitcoin network 106 and bitcoin nodes 104 as described above.

In some embodiments of the invention, the blockchain network 106 is the bitcoin network and bitcoin nodes 104 perform at least all of the described functions of creating, publishing, propagating and storing blocks 151 of the blockchain 150. It is not excluded that there may be other network entities (or network elements) that only perform one or some but not all of these functions. That is, a network entity may perform the function of propagating and/or storing blocks without creating and publishing blocks (recall that these entities are not considered nodes of the preferred bitcoin network 106).

In some other embodiments of the invention, the blockchain network 106 may not be the bitcoin network. In these embodiments, it is not excluded that a node may perform at least one or some but not all of the functions of creating, publishing, propagating and storing blocks 151 of the blockchain 150. For instance, on those other blockchain networks a "node" may be used to refer to a network entity that is configured to create and publish blocks 151 but not store and/or propagate those blocks 151 to other nodes.

Even more generally, any reference to the term "bitcoin node" 104 above may be replaced with the term "network entity" or "network element", wherein such an entity/element is configured to perform some or all of the roles of creating, publishing, propagating and storing blocks. The functions of such a network entity/element may be implemented in hardware in the same way described above with reference to a blockchain node 104.

### Merkle Proofs

As described above, mining nodes group transactions into a block. The payload of the block contains an ordered set of the transactions, including the coinbase transaction. Each block has a block header that includes various data fields, including a field containing a summary value determined based on the contents of the block. The summary value represents a fingerprint or summary of the contents of the block. In particular, the summary value is determined from the ordered set of transactions in the block. In many implementations, this summary value is a Merkle root. The Merkle root is determined through building a Merkle tree from the ordered set of transactions. While the following description refers to a Merkle root, the term "summary value" may be understood as including a Merkle root or other such data values that are representative of the contents of a payload, such as a hash chain or the like.

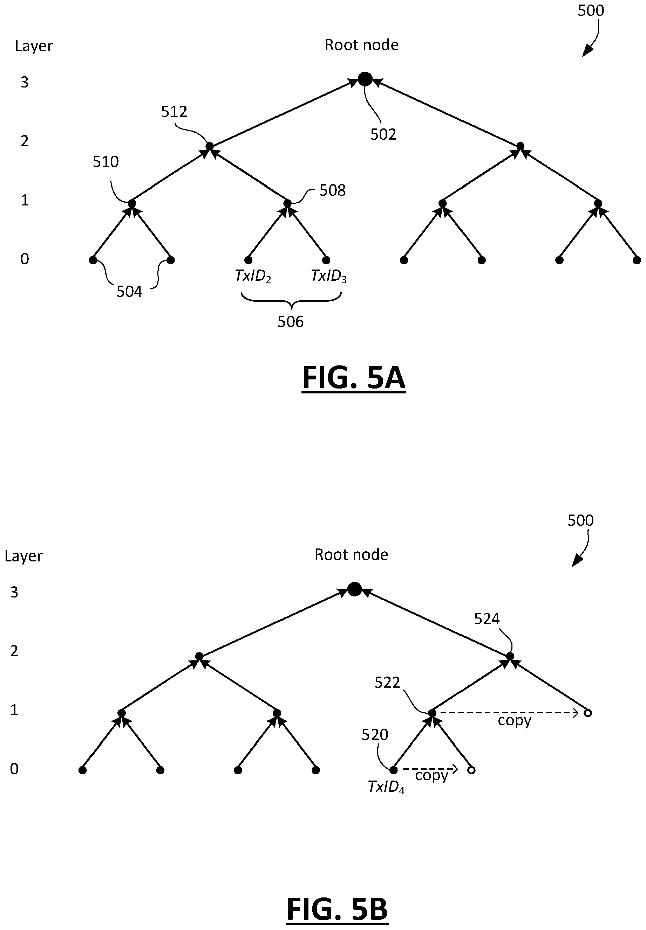

A Merkle tree for an ordered set of elements is built through hashing each element and recursively creating a next layer by concatenating adjacent pairs of hashed elements and hashing the concatenated hashed elements. A simplified example of a Merkle tree 500 is shown in Figure 5A.

In this example, the Merkle tree 500 relates to an ordered set of only eight elements, for ease of illustration. The Merkle trees in other examples may be smaller or, more commonly, much larger. Layers of the Merkle tree 500 are labelled from the bottom up, with layer 0 being the base layer, and layer 3, in this example, being a Merkle root 502. The Merkle tree 500 is formed by first creating the base layer through hashing of the elements. That is, each base layer node 504 is a hash of the corresponding element in that position. In the case of bitcoin, each base layer node 504 is a hash (double-SHA256, in the case of bitcoin) of its corresponding transaction. The double-SHA256 hash of a transaction is also its transaction identifier, TxID. Accordingly, in the case of bitcoin, each of the base layer nodes 504 is a TxID corresponding to the transaction in that position in the ordered set of transactions in a block.

To build the layer 1 nodes of the Merkle tree 500, the base layer nodes are grouped into pairs. Within each pair, the elements are concatenated and then hashed to find the value of the parent node at the layer above. For example, if a base layer pair 506 includes $TxID_2$ and $TxID_3$, then the two TxID are concatenated as $TxID_2\|TxID_3$, and the resulting value is hashed to calculate element 508.

Layer 2 elements are calculated as hashes of concatenated pairs of layer 1 elements, and so on. For example, element 512 is calculated from a hash of the concatenated pair of element 510 and element 508. The building of the layer through calculating intermediate hashes for the nodes at intermediate layers of the Merkle tree 500 continues until it results in a single element at a top layer, referred to as the Merkle root 502.

It will be appreciated that not every block with have a full set of transactions that includes exactly $2^n$ elements. Such cases may result in a "partial" Merkle tree. Figure 5B illustrates an example in which there are five elements at layer 0, e.g. five transactions in a block. While the first four elements can be paired, the last transaction indicated by reference numeral 520 has no corresponding paired element. It will be appreciated that the missing paired element at the base layer only arises in the case where the last element is a left-hand member of the pair. For the purposes of building the Merkle tree in this situation, a "copy" of the left-hand element is used as the right-hand element; that is, the $TxID_4$ indicated by numeral 520 is concatenated with itself and is hashed to find the value of its parent element at node 522. Likewise, because node 522 has no corresponding right-hand element in its pairing, the element at node 522 is concatenated with itself and hashed to find the value of its parent element at node 524 in layer 2.

The Merkle root 502 is inserted into the header of a block to serve as a fingerprint of the transactions within the block.

Merkle trees are useful to enable lightweight nodes, such as client applications on end user devices, to determine whether a certain transaction is present in a block on the blockchain without necessarily having to download the entire block or the full blockchain. A client application may determine whether a transaction is present in a block based on a Merkle proof. A Merkle proof involves tracing a path (the Merkle path) from the transaction to the Merkle root through the Merkle tree to confirm that the transaction was included in the block. The term "Merkle proof" may refer to the paired nodes within the Merkle tree adjacent to nodes on the path that are needed to calculate the parent node on the Merkle path, i.e. the paired adjacent Merkle tree hashes/nodes needed to calculated the nodes along the Merkle path in order to confirm the Merkle root.

A node may request Merkle proof data relating to a transaction from which it can perform a Merkle proof, e.g. trace the Merkle path. In one example, the requested data may be provided in the form of an ordered set of hashes corresponding to the paired hashes within the Merkle tree required along the path in order to arrive at the Merkle root, along with binary signals indicating whether the calculated and/or provided hash is a left-hand or right-hand element of each pairing.

For the purpose of the discussion herein, the following conventions may be used. An element that is calculated using hashing of available data (e.g. transaction data or concatenated elements of a Merkle tree) may be indicated using c[$n$], where $n$ refers to the layer of the tree and the bottom or base layer is at $n = 0$. An element of the tree, e.g. an intermediate hash, provided by another node for the purposes of the Merkle proof may be indicated using p[$n$]. That intermediate hash may be referred to as a "paired hash", or as having come from a "paired intermediate node" or "intermediate paired node" or the like, in the sense that each node has a corresponding paired node used in determining the parent hash value.

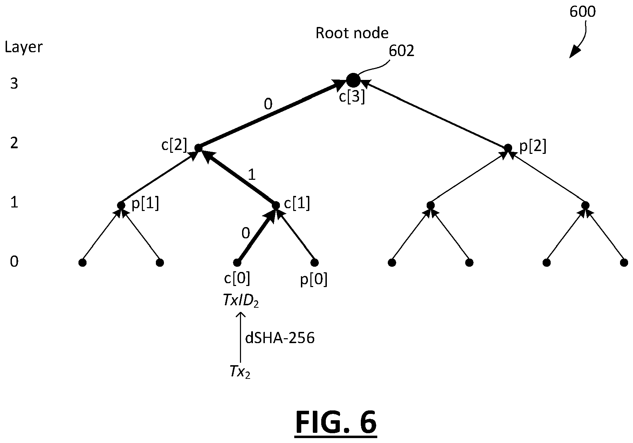

Figure 6 shows an example of a Merkle path through a Merkle tree 600. The Merkle path in this case relates to validating the presence of transaction Tx in a block. To complete the Merkle proof using this Merkle path, a computing device has the transaction Tx (or at least the TxID) and an ordered set of hashes (intermediate hashes) corresponding to the needed elements to form pairs along the Merkle path. In this example, the ordered set includes p[0], p[1], p[2].

The computing device also needs a mechanism for determining whether the provided intermediate hashes are left-hand or right-hand elements of a pairing. This can be signalled using binary flags in some cases. The binary flag may indicate, for each layer, whether the calculated hash (or provided hash) is the left-hand or right-hand element. In some cases, instead of signalling whether the calculated hash (or provided hash) at each layer is the left-hand or right-hand element, the position of the calculated hash in the bottom or base layer may be signalled, *i.e.* its index in the ordered set of elements. In some implementations, these may be effectively equivalent. For example, bitwise signalling of the left-hand (0) or right-hand (1) path tracing the calculated elements of layers 2 to 0 moving down the Merkle path from a Merkle root 602, results in the bits [0, 1, 0]. Equivalently, the index $i=2$ of the $c[0]$ element may be signalled, which in binary is 010. Other implementations may use different signalling or coding.

To carry out the Merkle proof, the computing device determines the $c[0]$ element by hashing (in this example, double-SHA256) the transaction Tx to obtain the TxID. In some cases, it may already have the TxID. It then concatenates it with the first provided hash in the ordered set of hashes, $p[0]$. The computing device determines from the index *i* or from the bit signalling whether the calculated hash $c[0]$ is a left-hand or right-hand element and concatenates accordingly. It then hashes the concatenation to determine $c[1]$. It carries on with this process until it determines $c[3]$, which it then compares to the Merkle root 602 found in the block header. If it matches, then the computing device has determined that the transaction Tx is included in the block. If not, then the transaction Tx is not in the block (or the Merkle proof hashes it was provided contain an error).

The position of an element in the ordered set of elements in a layer may be referred to as an "index" and may represented by *i* or by $indexOf(c[n])$ when referring to the index of a calculated element within the nth layer. At the bottom or base layer, the index *i* ranges from 0 to the count of transactions in the block less one.

### *Large volume transaction handling*

As the capacity of the network grows to accommodate larger numbers of transactions, nodes will need to adapt to handling significant flows of transactions. In some possible scenarios, the flow of new transactions may grow to tens of thousands, hundreds of thousands, even millions of transactions per minute.

The current structure of the Bitcoin blockchain architecture presumes that nodes maintain a "mempool", which is a data structure containing all pending transactions that have been validated by the node. The node then selectively chooses a subset of those transactions to include into a candidate block that the node's mining unit(s) mine in an attempt to find a proof of work. As new transactions come in to the node and are validated, they are added to the mempool. If the current node finds a proof of work on the candidate block, then it propagates the solution. If a solution is received from another node, then the node validates it. Once a valid proof of work is found, the node updates the mempool to remove the transactions that have now been confirmed in the block for which a proof of work was found, and builds a new candidate block from a subset of the current transactions in the block. The selection of the subset of transactions that get included in a block may be based on transaction fees, time in the mempool, or other factors.

As transaction volume increases, the capacity of this architecture may be challenged to keep up with the flow of new transactions. It would be advantageous to modify the architecture and the processes for handing new transactions and building candidate blocks to enable greater processing volume.

In one aspect of the present application, a node architecture and transaction handling process are described that enables the handling of large transaction flow. The node may not maintain a mempool and instead may add all new validated transactions to a candidate block. The transactions are added in an order and their corresponding transaction identifiers are added to an array that tracks the ordered set of transactions by transaction identifier. As the array reaches a threshold size, e.g. a maximum count of transactions, the node may determine the Merkle root of the ordered list of transaction identifiers in the array and add it to a candidate block header, which is then provided to mining units to find a proof of work. The node may continually build new arrays and, as each is completed, append its list of transactions to the current candidate block, each time increasing the size of the candidate block such that it contains a consolidated ordered list of transactions, and provide the updated and/or modified candidate block header to the node's mining units. As each new array is appended to the current ordered list of transaction identifiers, that array's Merkle root is used together with the Merkle roots of the previously-added ordered lists of transaction identifiers to determine a current Merkle root for the block and to update the block header.

In another aspect of the present application, a placeholder transaction may be put in the first position of the first of the ordered list of transactions identifiers. The placeholder transaction is to be replaced by a coinbase transaction inserted by the mining units before they undertake the search for a proof of work. The mining units thus determine the actual Merkle root for the first ordered list of transactions and, consequently, the overall top-level Merkle root for the candidate block that is then inserted in the block header before it is hashed in search of a proof of work.

The term "transaction identifier" as used in the present application may, in many implementations, refer to TxIDs created from transactions using a double hash; however, in some implementations the "transaction identifier" may be any other unique identifier for the transaction. It may be derived from different hashes or combinations of hashes in some cases. It may be shortened form of the conventional TxID in some cases, such as BIP152 for example.

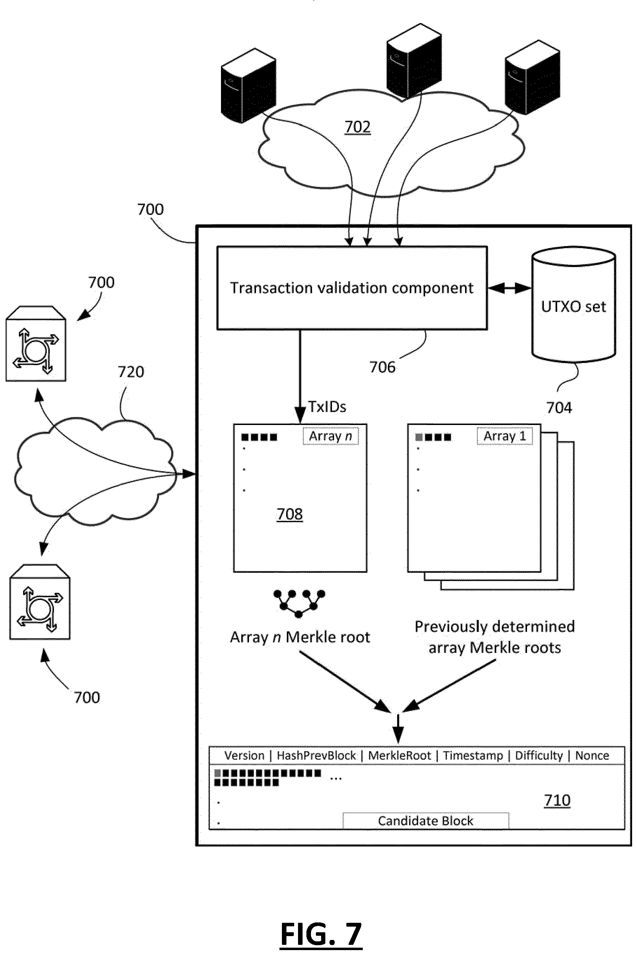

Reference is now made to FIG. 7, which diagrammatically shows a simplified example blockchain node 700 for processing a large volume of blockchain transactions. In this example, the node 700 is shown as a single device; however, it will be appreciated that the node 700 may be implemented using one or a plurality of computing devices. The computing devices include one or more processors, memory, internal communications busses, and external network communication subsystems, among other systems.

The node 700 is configured to receive incoming transactions over a computer network 702. The transactions may be received from user devices, point-of-sale devices, merchant computing devices, or other sources of transactions. In some cases, the transactions may be received from other blockchain nodes. The node 700 includes a transaction validation component 706. The transaction validation component 706 carries out transaction validation in accordance with the applicable blockchain protocol. This may include determining whether the inputs to the transaction are validly formatted and available in a UTXO set 704 maintained in a data structured stored in memory at the node 700. The transaction validation component 706 may be configured to validate transactions in parallel in many implementations to increase throughput.

Validated transactions may then be added to a candidate block. In this example, the node 700 adds the transaction identifier of a valid transaction to an array 708. The array 708 may be a one-dimensional array in some cases. In some implementations, the array may be multidimensional, but the transaction identifiers are added to the array 708 such that they form an ordered list or set of transaction identifiers. The transactions themselves may by similarly stored in a data structure having the same order. In some cases, the transactions are directly added to a candidate block 710 maintained in memory at the node 700 by appending them to the set of transactions in the candidate block 710 in the same order in which their corresponding transaction identifiers are added to the array 708. In some implementations, a separate data structure storing the transactions is maintained by the node for transactions corresponding to transaction identifiers in the array 708 until the array 708 is complete and then the transactions from the separate data structure are appended to the transactions in the candidate block 710 in bulk.

It will be appreciated that there is no separate mempool maintained by the node 700 that stores all pending and unconfirmed transactions, and the node 700 does not selectively choose a subset of pending transactions for inclusion in a candidate block. Instead, all incoming validated transactions are added to the candidate block 710 and the array 708 maintains a corresponding list of transaction identifiers.

When the array 708 is complete, the node 700 determines a Merkle root for the ordered list of transaction identifiers. The array 708 may be considered "complete" when it reaches some threshold size, such as a maximum count of transaction identifiers, or a maximum byte size, or some other similar measure. In many implementations, the arrays need to be of size $2^n$, other than the last array. To handle large volumes, it is probable that in some embodiments the array 708 may contain hundreds of thousands, perhaps even millions, of transaction identifiers.

In the case of the first array to be completed, only its transactions are in the candidate block 710 so its Merkle root is the top-level Merkle root for the candidate block 710, subject to a special handling of the coinbase transaction as will be described below. The node 700 may provide mining units with data regarding the candidate block 710 to enable them to begin searching for a proof of work. In some cases, this may include providing the mining units with the list of ordered transactions from the array and the Merkle root information determined by the node 700, along with additional block header information. In some cases, this may include providing the units with just the block header data and Merkle path data to enable the mining units to add a coinbase transaction and to determine the top-level Merkle root from the coinbase transaction and the Merkle path data.

The node 700 continues building arrays of transaction identifiers from the flow of validated transactions. As each array is completed, its Merkle root is determined, the ordered list of transactions is added to the candidate block to create a consolidated ordered set of transactions, and the top-level Merkle root is determined from the new Merkle root and the Merkle roots of all the previously added arrays. The node 700 thus generates a set of arrays, each one containing a non-overlapping ordered set of transaction identifiers. With each array completed, the candidate block is updated to add the new set of transactions and the modified/updated candidate block header and/or candidate block data is pushed to the mining units to search for a proof of work.

The node 700 is further configured to "pre-share" the array information prior to discover of a proof-of-work. That is, the node 700 sends data regarding a completed array to other nodes 700 across a blockchain network 720. The blockchain network 720 may be same network as the computer network 702, a different network from the computer network 702, a subnetwork within the computer network 702, or an overlay network atop the computer network 702. The networks 702, 720 may include wired and/or wireless communications networks using a variety of possible communications protocols.

By sending the complete array to other nodes, the other nodes are able to determine if they are missing any transactions and request them from the node 700. Once they obtain the new transaction they can validate it and add it to their own arrays and candidate blocks. The other nodes may also store array data for received arrays. In that manner, if a proof of work is found by the node 700, the validation is faster because the other nodes have already seen the array(s), determined that they contain validated transactions that the node has already vetted, and validated the Merkle root determination. They need only combine the Merkle roots of the arrays and confirm the top-level Merkle root in the block header.

In some cases, the array 708 may be referred to as a sub-tree since its transaction identifiers form a portion of the total consolidated ordered list of transaction identifiers that may be in a candidate block, such that the transaction identifiers from the array may be used to find a part of the Merkle tree for the candidate block, *i.e.* a "sub-tree". Each array has a unique array identifier, or "sub-tree identifier", that is sent with the array when propagated to other nodes over the blockchain network 720. The other nodes, having determined that they have seen and validated all transactions in the array may then store the array identifier in memory in association with the array data. Likewise, when the node 700 receives arrays from other nodes it determines whether it has received and validated all the tranasctions listed in the array by transaction identifier and it then validates the Merkle root of the array and stores the array identifier in memory in association with the array data.

Accordingly, if a mining unit at the node 700 finds a valid proof-of-work for a candidate block then it outputs the solution, including the nonce and other block header data and the coinbase transaction included in the block. The node 700 forwards the solution to other nodes over the blockchain network 720. The solution forwarded to other nodes may include the block header, the coinbase transaction, and an ordered set of array identifiers. The ordered set of array identifiers tell the other nodes which arrays were in the candidate block that was successfully mined. This enables the nodes to reconstruct the solved block from the stored array data based on the ordered set of array identifiers. Having already validated the transactions within the array and validated the Merkle root of the array earlier, the receiving nodes need only build the upper portion of the Merkle tree using the Merkle roots of the arrays and the coinbase transaction and corresponding Merkle path data for the coinbase transaction, as will be described below. The can thus verify the Merkle root in the block header and confirm the validity of the block solution.

If one of the other nodes has not seen one of the arrays specified by array identifier, then it may request it from the node 700, for example using an *INV* message or an equivalent request message.

When the node 700 receives a block solution from another node in the blockchain network 720, it carries out the same process of retrieving the stored arrays from memory based on the array identifiers sent in the solution, finding the Merkle root from the coinbase transaction and the array Merkle roots and confirming it matches the Merkle root in the block header, and validating that the hash of the block header is a valid solution. If the solution is valid, *i.e.* if it is a solved block, then the node 700 adds the block to its copy of the blockchain in the usual manner, and it then removes all the transactions in the solved block from its own candidate block and from any stored arrays that were used in constructing the candidate block. There is no mempool to update since a separate mempool is not being maintained, but the confirmed transactions are extracted or deleted from the arrays and candidate block. This may result in deletion of all transactions in the candidate block and arrays or may leave some unconfirmed transactions. If any unconfirmed transactions are left, they are then grouped into an ordered set of transactions forming a new array or arrays, and a new candidate block is generated containing the new array or arrays, and the mining process continues.

Many of the functions carried out by the node 700 may be implemented using a microservices architecture.

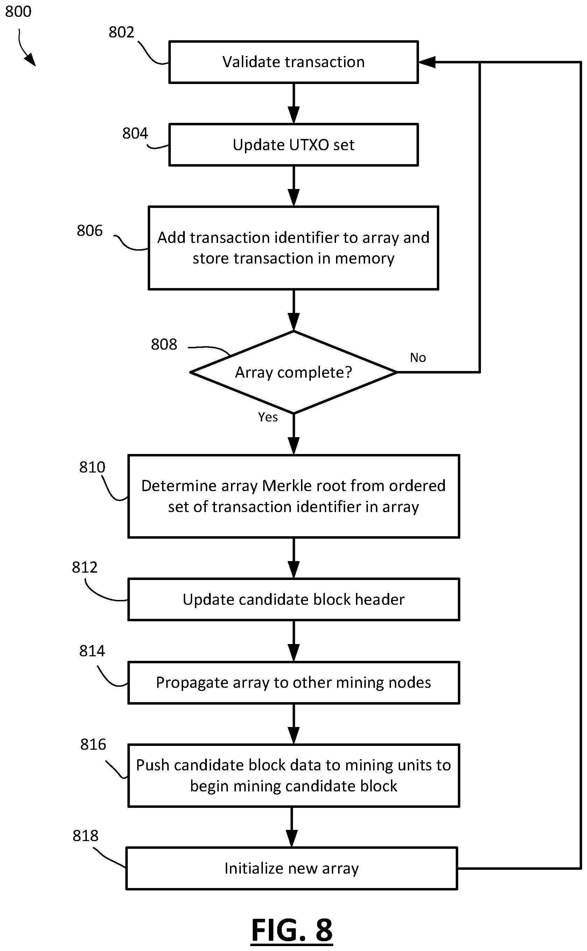

Reference is now made to FIG. 8, which shows an example method 800 for transaction handling in a blockchain node. The method 800 may be implemented by a node such as node 700 (FIG. 7), using one or more computing devices each having one or more processing units, memory, and communications subsystems. Suitable software stored in memory and executable by the one or more processing units may configured the processing units to carry out the described functions or operations. In some cases, a microservices architecture may be used to implement the method 800. While the operations described below are set out in a linear format, it will be appreciated that some implementations may at least partly parallelize some of the operations and/or carry them out in a different order without materially impacting operation of the method 800.

In operation 802, the node validates an incoming transaction. The validation of the transaction is carried out in the usual manner in accordance with the applicable blockchain protocol and may include confirming that the inputs to the transaction are not already consumed. This may include verifying that the inputs are available for use by way of a UTXO set that is stored in memory. In operation 804, the node may then update the UTXO set to indicate that the inputs to the transaction have been consumed so at to avoid a possible double-spend by a subsequent transaction. Various techniques may be employed to resolve conflicts between two unconfirmed transactions that use the same input(s) and to determine which to consider valid and which to consider invalid.

In operation 806, the node adds the validated transaction identifier to an array by appending it to the ordered list of transaction identifiers in the array. The transaction may be added to a candidate block and/or may be held in memory in association with the transaction identifier. As noted above, the array may be a one-dimensional array holding the ordered list of transaction identifiers. In some case, the array may be implemented as a multi-dimensional array using a suitable data structure, provided the transactions identifiers in the array are still arranged in a serial order using some known storage pattern. The array is stored in memory at the node in this example.

In operation 810, the node assesses whether the array is complete. The determination of whether the array is complete may be based on the contents of the array reaching a maximum or threshold quantity. The determination may be based on the array having N transaction identifiers, where N is an integer value. In order to enable the concatenating of lists of transaction identifiers from the arrays and the reliance on array Merkle roots to construct the top level of the Merkle tree once arrays are consolidated, the transaction count in each array conforms to a size of $2^n$. If not complete, then the node continues adding newly-validated transactions to the array as they flow in and are processed by a transaction validation component or service.

If the array is considered complete, then the node determines the Merkle root for the array in operation 810. Based on the ordered list of transaction identifiers, the node builds a Merkle tree though concatenating and hashing pairs of transaction identifiers, building up level by level until it reaches a top-level Merkle root for the array. The node may store the Merkle root for the array in association with the array in memory. In some cases, the Merkle root of the array also serves as the unique array identifier. In some cases, a separate array identifier is determined for the array, such as through hashing the entire array or using some other mechanism to generate a unique identifier.

In operation 812, the node updates the candidate block header data. In some instances this may include calculating the Merkle root for the candidate block header based on the Merkle root determined in operation 810 for the newly-completed array. If the transactions of the newly-completed array are appended to an existing ordered set of transactions in the candidate block corresponding to previously-completed arrays, then the determination of the Merkle root for the candidate block is based on the Merkle roots of those previously-completed arrays and the Merkle root of the newly-completed array.

The node maintains a candidate block in memory that includes, in order, the transactions corresponding to the complete arrays. In some cases, it appends transactions to the candidate block as it adds their transaction identifiers to the array in operation 806. In some cases, it stores the transactions in a separate data structure in memory as the transaction identifiers are added to the current array and it then appends the full set of transactions from the separate data structure to the candidate block once the array has been completed.

The candidate block has an associated candidate block header. The candidate block header may be a partially complete header that does not yet have a value in the Merkle root field. In some cases, the candidate block header data updated in operation 812 includes inserting the Merkle root for the consolidated list of transactions represented by the array(s) added to the candidate block. In some cases, operation 812 includes adding the newly-completed array Merkle root to a list of array Merkle roots to be provided to mining units, which then determine the top-level block Merkle root using those array Merkle roots and the coinbase transaction the mining unit adds to the block. In some cases, the candidate block header data includes a Merkle path for the coinbase transaction such that the mining units can quickly determine the Merkle root for the first array in the block after they determine their respective coinbase transactions.

In operation 814, the node propagates the newly-completed array to other blockchain nodes on the blockchain network. The propagation of the array includes sending the array data, such as the ordered list of transaction identifiers and an array identifier. The propagation may further include sending the array Merkle root. In some cases, the array Merkle root is also the array identifier.

The node also causes the mining units to begin mining on the updated candidate block, *i.e.* the block with the newly-completed array transactions appended, as indicated by operation 816. This may include pushing updated candidate block header data to the mining units, which then determine and insert a coinbase transaction and calculate the top-level Merkle root before they begin search for a proof of work.

In operation 818, the node initializes a new array and returns to operation 802 to begin building out the new array with incoming validated transactions.

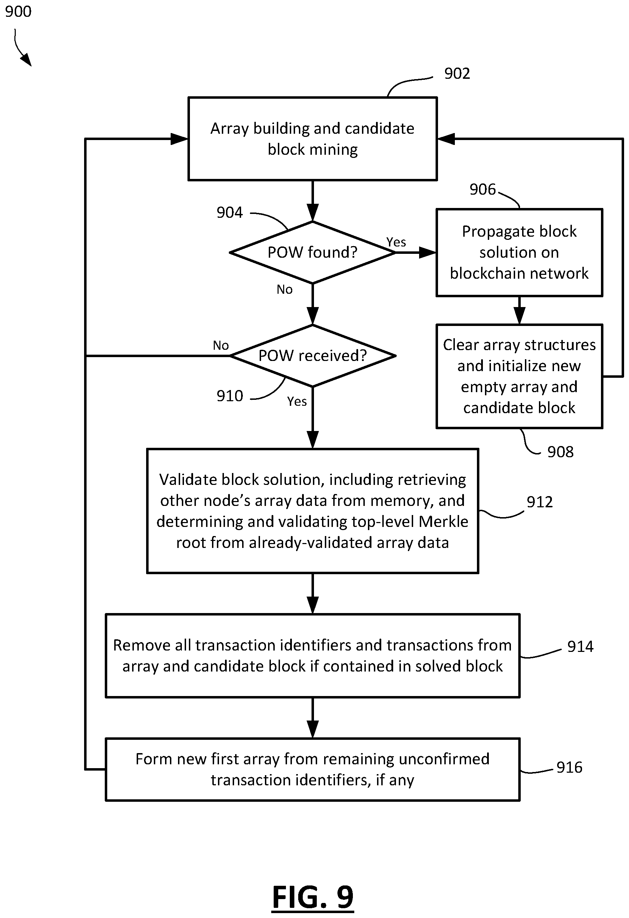

Reference is now made to FIG. 9, which shows an example method 900 for managing pending transactions when a proof-of-work solution is found. The method 900 may be implemented by a node such as node 700 (FIG. 7), using one or more computing devices each having one or more processing units, memory, and communications subsystems. Suitable software stored in memory and executable by the one or more processing units may configured the processing units to carry out the described functions or operations. In some cases, a microservices architecture may be used to implement the method 900. While the operations described below are set out in a linear format, it will be appreciated that some implementations may at least partly parallelize some of the operations and/or carry them out in a different order without materially impacting operation of the method 900.

Operation 902 indicates the process of array building and mining, such as is described above in connection with FIG. 8. This may include validating transactions, building an array containing an ordered set of transaction identifiers, sharing that array with other nodes, adding the transactions to a candidate block, determining a Merkle root for the array and a top-level Merkle root for the candidate block header based on a consolidated set of transactions in the candidate block and the respective array Merkle roots. As described above, the array building and mining is carried out without the use of a mempool, such that all validated transactions are added to an array and used to build the candidate block.

In operation 904, the node assesses whether its mining units have managed to find a proof of work. In operation 910, the node assesses whether a proof-of-work solution has been received from another node on the blockchain network. Although shown serially in FIG. 9, it will be appreciated that these operations may occur in parallel. In many implementations, the operations may be implemented by way of interrupt or other notification from either one of the mining units or from one of the other nodes on the blockchain network. Lack of any such interrupt or notification regarding a solution route the method 900 back to operation 902 to continue building arrays and mining.

If a proof-of-work is found by one of the mining units, as indicated in operation 904, then in operation 906 the node propagates the solution on the blockchain network. Notably, because the node has previously propagated the arrays that reflect the contents of the candidate block mined by the mining units, the message communicating the solution may include block header data, such as the top-level Merkle root, the nonce, and other such data, and may include the coinbase transaction used by the mining unit in the candidate block. The message communicating the solution may further include an ordered list of array identifiers that signal the contents of the candidate block. Any of the other nodes that have not received any of the arrays may then respond to the message with a request for any missing array. At the other nodes, the solved block may be constructed based on retrieving the array data corresponding to the array identifiers from local memory and the solution may then be validated. In many instances, the other nodes would have previously validated the arrays in that they confirm the transaction identifiers in the array have been seen and independently validated by that other nodes, and the array Merkle root is valid. Accordingly, on receiving notice of the solution, the other nodes need only build the top portion of the Merkle tree using the already-validated array Merkle roots so as to validate the block header.

In operation 908, the node may clear its arrays and candidate block data, since all of the formerly pending unconfirmed transactions listed in the arrays are now included in a mined block. It may further update a copy of the blockchain maintained at the node with the newly-mined block. An empty array may then be initialized and the method 900 returns to operation 902 to continue anew. The initialization of an empty array may include inserting a placeholder transaction in the first index position in place of the coinbase transaction, as will be discussed further below.

If the node determines in operation 910 that a proof-of-work has been found by another node in the blockchain network, for example through receipt of a block solution message, then in operation 912 it validates the newly-mined block. Validation of the block may include building the Merkle tree to find the Merkle root in the block header received in the block solution message. The block solution message may further includes an ordered list of array identifiers that signal which sets of transactions are in the block and in what order. The node confirms that it has already received and validated the array data for each of the array identifiers, including confirming the array Merkle roots. If the node has not already received and validated an array corresponding to one of the array identifiers, it requests that data from the blockchain network.

Because it has already validated the arrays and the array Merkle roots, the node need only build the top of the Merkle tree to validate the top-level Merkle root in the block header. It has also already validated the transactions listed in the arrays by their Merkle roots. Accordingly, validation of the block solution may occur must faster than in earlier blockchain systems.

Once the block solution has been validated, then in operation 914 the node compares the transactions and transaction identifiers in the solved new block with the transactions and transaction identifiers from in the node's current candidate block and its arrays it has stored in memory. It removes or deletes any matching transactions and transaction identifiers, leaving only unconfirmed transactions and transaction identifiers that were not included in the solved block. In other words it purges its candidate block and its arrays of any transactions that have now been confirmed in the block. The remaining transactions are unconfirmed and are to be included in the next candidate block that the node attempts to mine.

In operation 916, the node forms a new array(s) containing the unconfirmed transactions that remain after purging the old array(s) of the confirmed transactions. The method 900 then returns to operation 902 to build the array(s) and mine the candidate block using the incoming flow of new validated transactions.

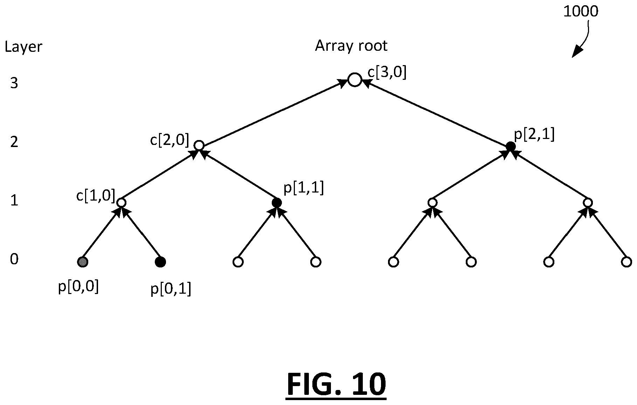

Reference is now made to FIG. 10, which diagrammatically illustrates a simplified Merkle tree 1000 for a first array. The first array may be the first array constructed for a candidate block. In this simplified example the first array includes a set of eight transaction identifiers, TxIDs, at level 0 of the array. The first TxID is a placeholder transaction at p[0,0].

In this example, the coinbase transaction is to be positioned first in the list of all transactions contained in a block being mined. Normally, a mining unit may insert its coinbase transaction and calculated the Merkle tree for a block in order to insert the Merkle root in the block header before undertaking mining of the block. In this example, however, the arrays are constructed and the array Merkle roots are determined by the node before being provided to the mining unit(s). Therefore, the node inserts a placeholder transaction in the position normally occupied by the coinbase transaction. The mining units may then replace the placeholder transaction with a coinbase transaction before mining the candidate block.

It will be appreciated that the node cannot accurately provide the array Merkle root for an ordered set of transactions if one of them to be replaced. However, it can provide a Merkle path that enables the quick determination of the array Merkle root for the first array. Using the illustrated example simplified tree, the node may determined the Merkle path including nodes p[0,1], p[1,1], and p[2,1], where the notation uses the convention p[*level, index*] to indicate which nodes are calculated by the node and provided as part of the Merkle path.

Then, once the mining units insert a coinbase transaction in position p[0,0], they use the Merkle path values of p[0,1], p[1,1], and p[2,1] to calculated the values at c[1,0], c[2,0], and the array Merkle root at c[3,0].

Accordingly, in the above description to the extent operations are described of transmitting or propagating arrays together with the array Merkle root, it will be appreciated that for the first array this include sending the coinbase Merkle path instead of the array Merkle root. This enables the mining units and the other nodes on the blockchain network to easily determine the array Merkle root later once the coinbase transaction is available and used instead of the placeholder transaction.

The various embodiments presented above are merely examples and are in no way meant to limit the scope of this application. Variations of the innovations described herein will be apparent to persons of ordinary skill in the art, such variations being within the intended scope of the present application. In particular, features from one or more of the above-described example embodiments may be selected to create alternative example embodiments including a sub-combination of features which may not be explicitly described above. In addition, features from one or more of the above-described example embodiments may be selected and combined to create alternative example embodiments including a combination of features which may not be explicitly described above. Features suitable for such combinations and sub-combinations would be readily apparent to persons skilled in the art upon review of the present application as a whole. The subject matter described herein and in the recited claims intends to cover and embrace all suitable changes in technology.

**Claims**

1. A computer-implemented method of blockchain transaction processing in a node, the method comprising:

    appending transaction identifiers for validated transactions to an array as an ordered list of transaction identifiers; and
    determining that the array has reached a maximum size and, in response,

    determining an array summary value for the ordered list of transaction identifiers,
    adding the ordered list of transaction identifiers to a candidate block containing previously completed ordered lists of transaction identifiers to form a consolidated ordered list of transaction identifiers,
    using the array summary value and array summary values of the previously completed ordered lists of transaction identifiers to determine a top-level summary value for the consolidated ordered list of transaction identifiers,
    modifying a block header of the candidate block to include the top-level summary value; and
    propagating the array on a blockchain network to a plurality of other nodes.

2. The method of claim 1, further comprising, in response to the determining that the array has reached a maximum size, providing header data for the candidate block to one or more mining unit to search for a proof of work.

3. The method of claim 2, wherein each of the one or more mining units receives a partially complete block header and the array summary values, and carries out the operations of determining the top-level summary value and modifying the block header to include the top-level summary value.

4. The method of any one of claims 1 to 3, wherein the method further includes, in response to the determining that the array has reached a maximum size, initializing a new array to contain a new ordered list of transaction identifiers for subsequently received and validated transactions, and appending the new ordered list of transaction identifiers to the consolidated ordered list of transaction identifiers when the new array has reached the maximum size.

5. The method of any one of claims 1 to 4, wherein determining that the array has reached a maximum size includes determining that a count of transactions has reached a maximum count, and, optionally, wherein the maximum count is $2^n$ transactions, where $n$ is an integer.

6. The method of any one of claims 1 to 5, further comprising:

    receiving a block solution from a mining unit at the node, including a coinbase transaction and a solved block header;
    propagating the block solution to other nodes on a blockchain network; and
    initializing a new empty first array.

7. The method of any one of claims 1 to 5, further comprising receiving a block solution from another node on the blockchain network, validating the block solution and, in response to validation of the block solution, comparing transaction identifiers from the block solution to transaction identifiers in the consolidated ordered list of transaction identifiers, removing any matching transaction identifiers from the consolidated ordered list of transactions identifiers, and initializing a new first array containing remaining unmatched transactions from the consolidated ordered list of transactions identifiers.

8. The method of claim 7, wherein the block solution includes an ordered set of array identifiers and a block header, and wherein validating the block solution includes:

   retrieving array data from memory corresponding to the ordered set of array identifiers, wherein the array data includes previously-validated array summary values;
   determining a block summary value using the previously-validated array summary values; and
   verifying that the determined block summary value is in the block header.

9. The method of any one of claims 1 to 8, further comprising:

   building a first array, wherein the first array includes a placeholder transaction;
   determining a Merkle path for the placeholder transaction; and
   propagating the first array to the plurality of other nodes on the blockchain network and, optionally, propagating the Merkle path for the placeholder transaction to the plurality of other nodes on the blockchain.

10. The method of claim 9, further comprising, at a mining unit, replacing the placeholder transaction with a coinbase transaction and using the Merkle path to determine a first array summary value for the first array.

11. The method of any one of claims 1 to 8, further comprising:

   receiving, from another node on the blockchain network, array data including a first array identifier, a first array containing a placeholder transaction, and a Merkle path for the placeholder transaction;
   validating the Merkle path; and,
   storing the array data in memory in association with the first array identifier.

12. The method of claim 11, further comprising receiving a block solution from the another node, the block solution including a coinbase transaction and an ordered set of array identifiers including the first array identifier, retrieving the first array and the Merkle path from memory based on the first array identifier, and determining a first array summary value using the coinbase transaction and the Merkle path.

13. The method of claim 12, wherein the block solution includes a block header and wherein validating the block solution includes:

   retrieving array data from memory corresponding to the ordered set of array identifiers, wherein the array data includes previously-validated array summary values;
   determining a block summary value using the first array summary value and the previously-validated array summary values; and
   verifying that the determined block summary value is in the block header.

14. The method of any one of claims 1 to 13 wherein the summary values are Merkle roots.

15. A computing device, the computing device including:

   one or more processors;
   memory; and
   computer-executable instructions stored in the memory that, when executed by the one or more processors, cause the processors to carry out the method claimed in any one of claims 1 to 14.

16. A computer-readable medium storing processor-executable instructions, the processor-executable instructions including instructions that, when executed by one or more processors, cause the processors to carry out the method claimed in any one of claims 1 to 14.

**FIG. 1**

152i

202     $Tx_0$     201

| $TxID_0$ | |
|---|---|
| Input(s) | Output(s) |
| **Input** <br>• Pointer to previous $Tx$ <br>• Index of UTXO in previous $Tx$ <br>• Unlocking script for unlocking from previous party <br><br>⋮ <br><br>Optional further inputs <br>⋮ | $\underline{UTXO_0}$ <br>• Amount <br>• Locking script locking to Alice <br><br><br>⋮ <br><br>Optional further $UTXO$s <br>⋮ |

203

152j

$Tx_1$     201    203

| $TxID_1$ | |
|---|---|
| Input(s) | Output(s) |
| **Input** <br>• Pointer to $Tx_0$ <br>• Index of $UTXO_0$ [within $Tx_0$] <br>• Unlocking script for unlocking $UTXO_0$ from Alice <br><br>⋮ <br><br>Optional further inputs <br>⋮ | $\underline{UTXO_1}$ <br>• Amount <br>• Locking script locking to Bob <br><br><br>⋮ <br><br>Optional further $UTXO$s <br>⋮ |

202

Transaction
from Alice to Bob

↓

Validated by running: Alice's locking script (from output of $Tx_0$), together with Bob's unlocking script (as input to $Tx_1$). This checks that Bob's unlocking script in $Tx_1$ meets the condition(s) defined in Alice's locking script in $Tx_0$.

**FIG. 2**

105

Client application

402

UI layer

401

Transaction
engine

403

**FIG. 3A**

Client app (Alice)

500

503

502

501

**FIG. 3B**

$Tx_i$     $Tx_j$     451     454

Protocol engine     Valid     Application level decision engine

$Tx_i$     $Tx_j$
locking     unlocking
script     script

104     450

452     Script engine     true/false     455C     Consensus

453     455P     Propagate

455S     Store

455     Functions

## FIG. 4

**FIG. 5A**

**FIG. 5B**

**FIG. 6**

**FIG. 7**

800

802 — Validate transaction

804 — Update UTXO set

806 — Add transaction identifier to array and store transaction in memory

808 — Array complete? — No

Yes

810 — Determine array Merkle root from ordered set of transaction identifier in array

812 — Update candidate block header

814 — Propagate array to other mining nodes

816 — Push candidate block data to mining units to begin mining candidate block

818 — Initialize new array

**FIG. 8**

900

902

Array building and candidate
block mining

904

POW found? —Yes→ 906

Propagate block
solution on
blockchain network

No

POW received?

910 —Yes

No

Clear array structures
and initialize new
empty array and
candidate block

908

Validate block solution, including retrieving
other node's array data from memory, and
determining and validating top-level Merkle
root from already-validated array data

912

Remove all transaction identifiers and transactions from
array and candidate block if contained in solved block

914

Form new first array from remaining unconfirmed
transaction identifiers, if any

916

## FIG. 9

1000

Layer

Array root

3      c[3,0]

2      c[2,0]      p[2,1]

1      c[1,0]      p[1,1]

0

p[0,0]      p[0,1]

# FIG. 10

Europäisches
Patentamt

European
Patent Office

Office européen
des brevets

# EUROPEAN SEARCH REPORT

**Application Number**

EP 23 20 7403

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 612 337 A (NCHAIN LICENSING AG [CH]) 3 May 2023 (2023-05-03) * abstract; figures 4-7 * * page 14, line 26 – page 15, line 9 * * page 16, line 18 – page 17, line 13 * * page 41, line 18 – page 42, line 23 * ----- | 1-16 | INV. H04L9/00 |
| A | WO 2022/100946 A1 (NCHAIN LICENSING AG [CH]) 19 May 2022 (2022-05-19) * abstract * * page 39, last paragraph – page 40, paragraph 3 * ----- | 1-16 | |
| A | GB 2 606 194 A (NCHAIN LICENSING AG [CH]) 2 November 2022 (2022-11-02) * abstract * * paragraph [0004] * ----- | 1-16 | |
| | | | TECHNICAL FIELDS SEARCHED (IPC) H04L |

The present search report has been drawn up for all claims

| Place of search | Date of completion of the search | Examiner |
|---|---|---|
| Munich | 28 March 2024 | Wolters, Robert |

EPO FORM 1503 03.82 (P04C01)

## ANNEX TO THE EUROPEAN SEARCH REPORT
## ON EUROPEAN PATENT APPLICATION NO.

**EP 23 20 7403**

This annex lists the patent family members relating to the patent documents cited in the above-mentioned European search report.
The members are as contained in the European Patent Office EDP file on
The European Patent Office is in no way liable for these particulars which are merely given for the purpose of information.

**28-03-2024**

| Patent document cited in search report | | Publication date | Patent family member(s) | | Publication date |
|---|---|---|---|---|---|
| GB 2612337 | A | 03-05-2023 | GB | 2612337 A | 03-05-2023 |
| | | | WO | 2023072948 A1 | 04-05-2023 |
| WO 2022100946 | A1 | 19-05-2022 | CN | 116547945 A | 04-08-2023 |
| | | | EP | 4245010 A1 | 20-09-2023 |
| | | | GB | 2600770 A | 11-05-2022 |
| | | | JP | 2023547715 A | 13-11-2023 |
| | | | KR | 20230101843 A | 06-07-2023 |
| | | | TW | 202220411 A | 16-05-2022 |
| | | | US | 2023394063 A1 | 07-12-2023 |
| | | | WO | 2022100946 A1 | 19-05-2022 |
| GB 2606194 | A | 02-11-2022 | NONE | | |

EPO FORM P0459

For more details about this annex : see Official Journal of the European Patent Office, No. 12/82